# EUROPEAN PATENT APPLICATION

(11) **EP 4 489 385 A1**
(43) Date of publication of application: **08.01.2025**
(21) Application number: 23785051.6
(22) Date of filing: 07.04.2023
(51) Int. Cl.: H04M 1/72454, H04M 1/72469, H04M 1/02, G06F 3/041, G06F 3/0481, G06F 3/0484

(54) **ELECTRONIC DEVICE COMPRISING FLEXIBLE DISPLAY, AND OPERATING METHOD FOR ELECTRONIC DEVICE**

(30) Priority: 07.04.2022 KR 20220043479; 27.09.2022 KR 20220122306
(71) Applicant: Samsung Electronics Co., Ltd, Suwon-si, Gyeonggi-do 16677 (KR)
(72) Inventor: KIM, Sangheon, Suwon-si, Gyeonggi-do 16677 (KR); LIM, Yeunwook, Suwon-si, Gyeonggi-do 16677 (KR)
(74) Representative: Walaski, Jan Filip
(86) International application number: PCT/KR2023/004759
(87) International publication number: WO 2023/195827

(57) **Abstract**

An electronic device according to various embodiments comprises: a first housing; a second housing; a flexible display having a display area that changes according to linear movement of the first housing with respect to the second housing; a motor module at least operatively connected to the first housing so as to perform driving so that the first housing slides with respect to the second housing; a sensor module; and a processor, wherein: the processor confirms information related to an object and a running application, confirms the movement of the first housing, confirms the movement distance of the first housing, confirms, from the sensor module, the position at which a user holds the electronic device, and determines, to be the position of the object, a position corresponding to the held position in response to the first housing moving a designated distance so that the display area of the flexible display changes; and the object executes a function designated by means of a designated operation of the user, and can include at least one from among a user interface (UI) that is visible or invisible on a screen, an icon, a figure, and a specific area of the electronic device. Other various embodiments are possible.

## Description

### [Technical Field]

Various embodiments disclosed herein relate to an electronic device including a flexible display.

### [Background Art]

Electronic devices are gradually becoming slimmer and more rigid, being enhanced in design aspects, and being improved to differentiate functional elements thereof. Electronic devices are gradually evolving from a uniform rectangular shape to diverse shapes. An electronic device may have a transformable structure that is convenient to carry and enables the use of a large-screen display. For example, an electronic device may have a structure capable of varying the display area of a flexible display (e.g., a rollable structure or a slidable structure) by supporting housings that operate in a sliding manner relative to each other. This electronic device may include a drive module (e.g., a drive motor) configured to allow, with respect to one housing, a remaining housing to automatically slide.

Meanwhile, a terminal may provide a multi-window (MW) environment that allows the simultaneous use of multiple applications. In an electronic device, a window size may be divided in various ways, such as a two-way split, three-way split, or four-way split, depending on the size of the screen. In addition, a user may arrange applications differently based on usage frequency. For example, in the case of multi-window applications frequently used by the user, the applications to be used in multi-window mode may be added to an edge panel (multi-window tray), and multiple applications selected from the edge panel may be displayed in a multi-window format.

### [Disclosure of Invention]

### [Technical Problem]

Various embodiments of the disclosure relate to a method of operating objects in an electronic device that includes a flexible display.

In response to the slide-in/slide-out operation of the flexible display, the electronic device may configure a screen to be displayed in a display area of a display. When configuring the display screen according to the slide-in/slide-out operation, the positions of the objects may change. In that case, if the position of objects differ from a user's gripping position, conflicts with the display position of a keyboard application, and/or conflicts with the position of a pop-up window occurs, it may cause usability problems for the user.

Various embodiments of the disclosure may solve the above-mentioned problems by implementing the coordinates of obj ects at a position convenient for the user in response to the slide-in/slide-out operation of the display. For example, in response to the slide-in/slide-out operation of the flexible display of the electronic device, the display position, display orientation, display form, and/or display size of an object may be determined based on the gripping state of the user's hand.

The technical problems to be addressed by the disclosure are not limited to those described above, and other technical problems, which are not described above, may be clearly understood by those ordinarily skilled in the related art to which the disclosure belongs.

### [Solution to Problem]

An electronic device according to various embodiments of the disclosure may include a first housing, a second housing, a flexible display having a display area that changes depending on linear movement of the first housing with respect to the second housing, a motor module at least operatively connected to the first housing and configured to drive the first housing to slide relative to the second housing, a sensor module, and a processor.

The processor may be configured to: identify information related to an object and a running application, identify a movement of the first housing, identify a movement distance of the first housing, identify, from the sensor module, a position at which a user grips the electronic device, and determine a position corresponding to the gripped position as a position of an object in response to the first housing moving a predetermined distance or more and the display area of the flexible display changing. The object may perform a function designated by a user's predetermined operation, and may include at least one of a visible or invisible user interface (UI) on a screen, an icon, a figure, and a specific area of the electronic device.

In various embodiments, the processor may be configured to obtain a user input that instructs the first housing to slide into or out of the second housing, and control the motor module based on the user input. The first housing may slide into or out from the second housing by operation of the motor module.

In various embodiments, the user input may include at least one of a button input, a touch input, a gesture input, an external input from an external electronic device (e.g., an S-pen) such as hover, air gesture, or air pointer, an input via wireless communication (e.g., a BT button), and a predetermined context.

In various embodiments, the motor module may include a drive motor configured to cause linear motion of the first housing in response to its rotation, and the processor may be configured to identify the movement distance of the first housing based on a rotation angle coefficient of the drive motor included in the motor module.

In various embodiments, the above sensor module may include a grip sensor and/or a touch sensor to measure a capacitance value according to a contact, and the processor may be configured to identify the position where the user grips the electronic device based on the capacitance value.

In various embodiments, the processor may be configured to determine the position of the object to be a position that does not overlap a position of the application, in response to a partial overlap between the gripped position and the position of the application.

In various embodiments, the processor may be configured to determine a position corresponding to the gripped position as the position of the object in response to a partial overlap between the gripped position and the position of the application, and change the position of the application to a position that does not overlap the position of the object.

In various embodiments, the processor may be configured to display the object on the flexible display at the determined position of the object.

In various embodiments, the processor may be configured to determine that, during the movement of the first housing, the object is in at least one selected from a form of changing a color of the object, a form of changing a transparency of the object, and a form of changing an effect of the object, and the effect may include at least one of a highlight effect or a blinking effect for the object.

In various embodiments, the processor may be configured to configure a screen frame to be output to the display area through a rendering process in response to a change in display area of the flexible display as the first housing moves, and configure the screen frame to be output to the display area based on the object.

In a method for operating an electronic device according to various embodiments of the disclosure, the electronic device may include a first housing, a second housing, and a flexible display whose display area changes depending on a linear movement of the first housing relative to the second housing, and the operating method may include identifying information related to an object and a running application, detecting a movement of the first housing, identifying a movement distance of the first housing, identifying a position at which a user grips the electronic device, and determining a position corresponding to the gripped position as a position of an object in response to the first housing moving a predetermined distance or more and the display area of the flexible display changing.

The object may perform a function designated by a user's predetermined operation, and may include at least one of a visible or invisible user interface (UI) on a screen, an icon, a figure, and a specific area of the electronic device.

In various embodiments, the operating method may include obtaining a user input that instructs the first housing to slide into or out of the second housing, and controlling the motor module based on the user input. The first housing may slide into or out from the second housing by operation of the motor module.

In various embodiments, the user input may include at least one of a button input, a touch input, a gesture input, an external input from an external electronic device (e.g., an S-pen) such as hover, air gesture, or air pointer, an input via wireless communication (e.g., a BT button), and a predetermined context.

In various embodiments, the motor module may include a drive motor configured to cause linear motion of the first housing in response to its rotation, and the operating method may include identifying the movement distance of the first housing based on the rotation angle coefficient of the driving motor included in the motor module.

In various embodiments, the electronic device may include a grip sensor and/or a touch sensor, and the operating method may include obtaining a capacitance value measured by a contact, and identifying a position where the user grips the electronic device based on the capacitance value.

In various embodiments, the operating method may include determining the position of the object to be a position that does not overlap a position of the application, in response to a partial overlap between the gripped position and the position of the application.

In various embodiments, the operating method may include determining a position corresponding to the gripped position as the position of the object in response to a partial overlap between the gripped position and the position of the application, and changing the position of the application to a position that does not overlap the position of the object.

In various embodiments, the operating method may include displaying the object on the flexible display based on the determined characteristics of the object.

In various embodiments, the operating method may include determining that, during the movement of the first housing, the object is in at least one selected from a form of changing a color of the object, a form of changing a transparency of the object, and a form of changing an effect of the object, and the effect may include a highlight effect or a blinking effect for the obj ect.

In various embodiments, the operating method may include configuring a screen frame to be output to a display area through a rendering process in response to a change in the display area of the flexible display as the first housing moves, and configuring a screen frame to be output to a display area based on the determined object.

### [Advantageous Effects of Invention]

An electronic device according to various embodiments may determine the position of an object based on a user's gripping state of the electronic device during slide-in and/or slide-out operation.

An electronic device according to various embodiments may change and display at least one of the position, orientation, display form, and display size of an object based on a user's gripping state of the electronic device during slide-in and/or slide-out operation.

An electronic device according to various embodiments may prevent conflicts (e.g., touch and/or gestures) between an object and a running application (e.g., a keyboard or pop-up window) during slide-in and/or slide-out operation.

An electronic device according to various embodiments may provide a dynamic method for determining the position of an object in response to slide-in and/or slide-out.

### [Brief Description of Drawings]

In connection with the description of the drawings, the same or similar components may be denoted by the same or similar reference numerals.
FIG. 1 is a block diagram of an electronic device according to various embodiments in a network environment.
FIGS. 2A and 2B illustrate front and rear views of an electronic device according to various embodiments of the disclosure in a slide-in state.
FIGS. 2C and 2D illustrate front and rear views of the electronic device according to various embodiments of the disclosure in a slide-out state.
FIG. 2E is an exploded perspective view of the electronic device according to various embodiments of the disclosure.
FIG. 2F is a cross-sectional view of the electronic device according to various embodiments of the disclosure taken along line 5a-5a in FIG. 2A.
FIG. 2G is a cross-sectional view of the electronic device according to various embodiments of the disclosure taken along line 5b-5b in FIG. 2C.
FIG. 3 is a block diagram of an electronic device according to various embodiments.
FIG. 4 is a flowchart illustrating a method for an electronic device according to various embodiments to determine the characteristics of an object and display the characteristics on a flexible display.
FIG. 5 is a view illustrating examples of objects according to various embodiments.
FIG. 6 is a view illustrating an example in which a display area of a display changes depending on the movement of a first housing, according to various embodiments.
FIG. 7 is a view illustrating an example of a change in the movement distance of a first housing relative to a second housing, according to various embodiments.
FIGS. 8A, 8B, 8C, and 8D are views illustrating examples of how an electronic device according to various embodiments determines the characteristics of an object based on the movement distance of a first housing, a running application, and/or a gripped position.
FIGS. 9A and 9B are views illustrating an example of how an electronic device according to various embodiments displays an object with determined characteristics on a display.
FIGS. 10A, 10B, and 10C are views illustrating examples of how an electronic device according to various embodiments determines the characteristics of an object based on the movement distance of a first housing, a running application, and/or a gripped position.

### [Mode for the Invention]

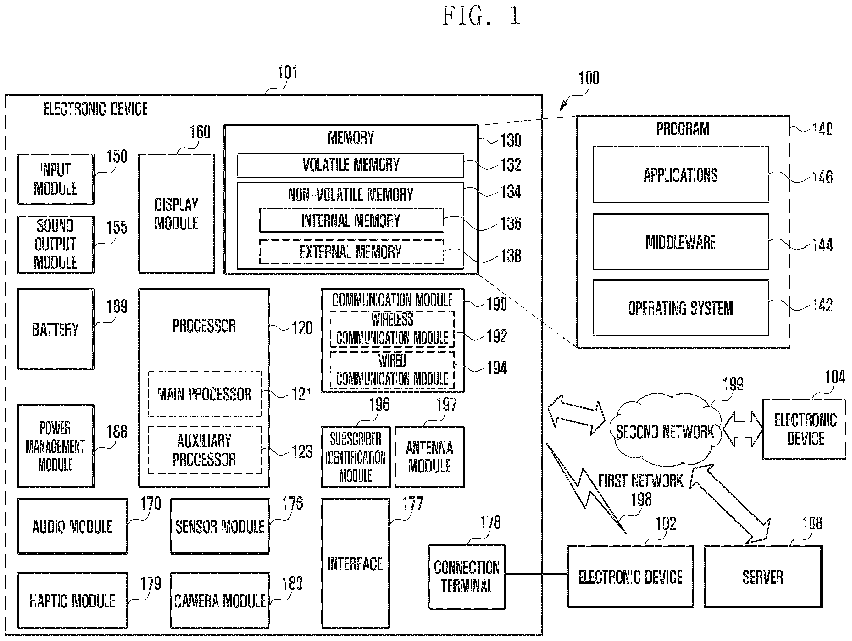

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

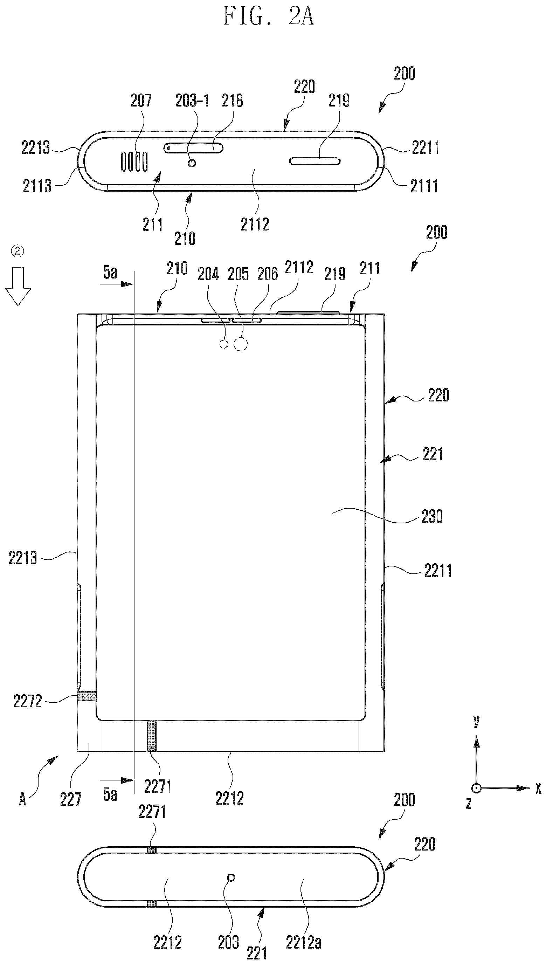

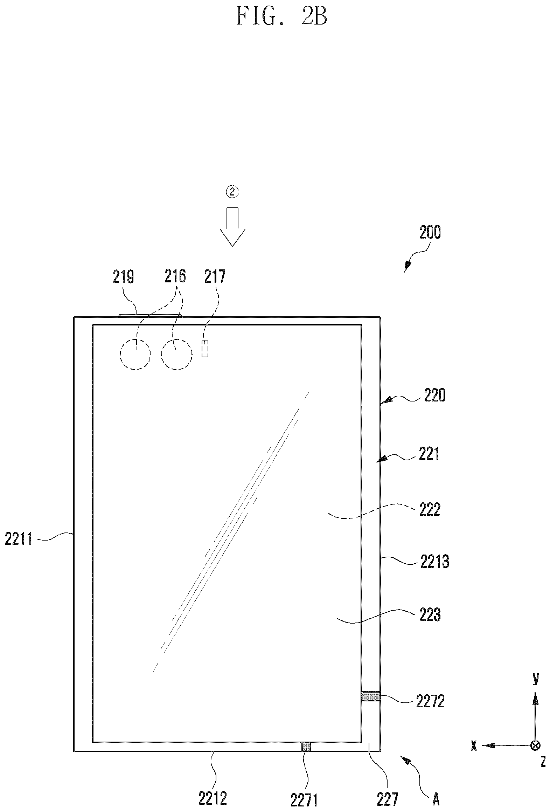

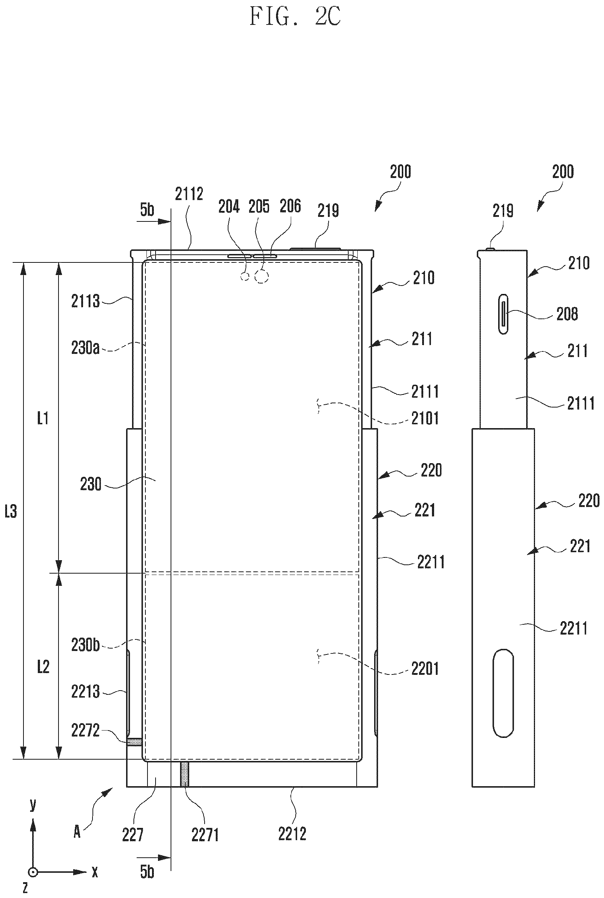

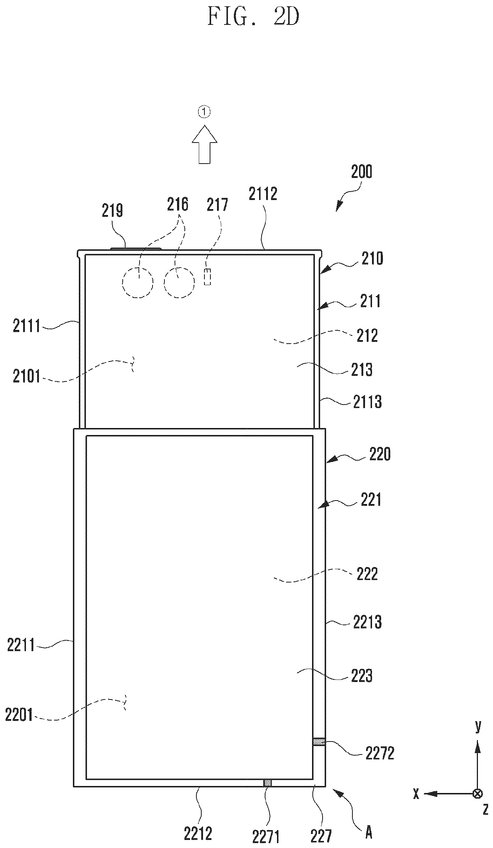

FIGS. 2A and 2B illustrate front and rear views of an electronic device according to various embodiments of the disclosure in a slide-in state. FIGS. 2C and 2D illustrate front and rear views of the electronic device according to various embodiments of the disclosure in a slide-out state.

The electronic device 200 of FIGS. 2A to 2D may be at least partially similar to the electronic device 101 of FIG. 1 or may further include other embodiments of the electronic device.

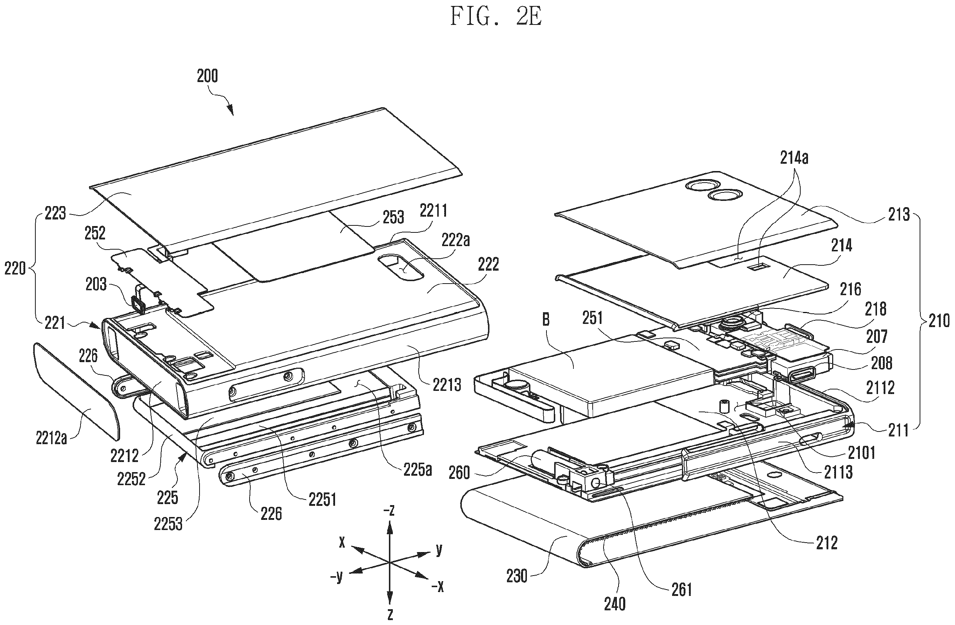

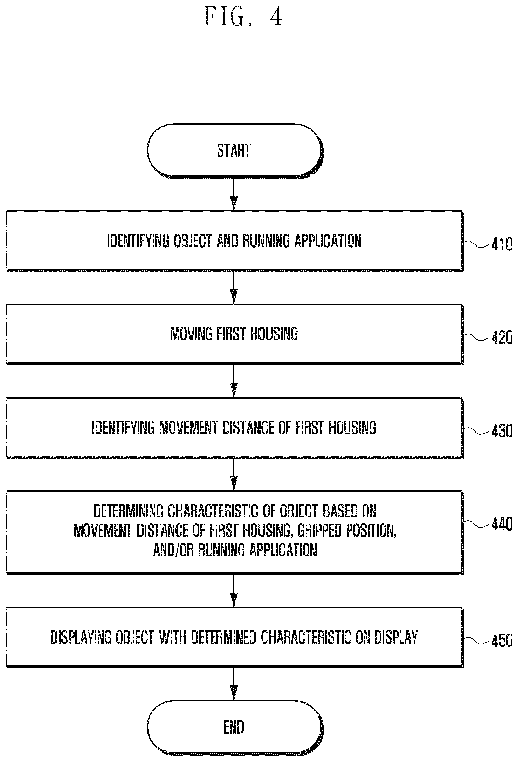

Referring to FIGS. 2A to 2D, the electronic device 200 may include a first housing 210 (e.g., a first housing structure, a moving part, or a slide housing), a second housing 220 (e.g., a second housing structure, a fixing part, or a base housing) coupled to be slidable in a predetermined direction (e.g., direction ① or direction ②) (e.g., the ±y-axis direction) from the first housing 210, and a flexible display 230 (e.g., an expandable display or a stretchable display) disposed to be supported by at least a portion of the first and second housings 210 and 220. According to an embodiment, the electronic device 200 may be configured such that, with respect to the second housing 220 gripped by a user, the first housing 220 slides out in a first direction (direction ①) or slides in in a second direction (direction ②) opposite to the first direction (direction ①). According to an embodiment, at least a portion of the first housing 210 including a first space 2101 may be switched into the slide-in state by being accommodated in a second space 2201 of the second housing 220. According to an embodiment, the electronic device 200 may include a bendable member or a bendable member (e.g., the bendable member 240 in FIG. 4) (e.g., a multi-joint hinge module or a multi-bar assembly) that forms at least partially the same plane as at least a portion of the first housing 210 in the slide-out state and is at least partially accommodated into the second space 2201 of the second housing 220 in the slide-in state. According to an embodiment, in the slide-in state, at least a portion of the flexible display 230 may be accommodated into the second space 2201 of the second housing 220 while being supported by the bendable member (e.g., the bendable member 240 in FIG. 4), thereby being disposed to be invisible from the outside. According to an embodiment, at least a portion of the flexible display 230 may be disposed to be visible from the outside while being supported by the bendable member (e.g., the bendable member 240 in FIG. 2E), which at least partially forms the same plane as the first housing 210 in the slide-out state.

According to various embodiments, the electronic device 200 may include a first housing 210 including a first side surface member 211 and a second housing 220 including a second side surface member 221. According to an embodiment, the first side surface member 211 may include a first side surface 2111 having a first length along a first direction (e.g., the y-axis direction), a second side surface 2112 extending from the first side surface 2111 along a direction substantially perpendicular to the first side surface 2111 (e.g., the x-axis direction) to have a second length smaller than the first length, and a third side surface 2113 extending from the second side surface 2112 to be substantially parallel to the first side surface 2111 and having the first length. According to an embodiment, at least a portion of the first side surface member 211 may be made of a conductive member (e.g., metal). In some embodiments, the first side surface member 211 may be formed by coupling a conductive member and a non-conductive member (e.g., polymer). According to an embodiment, the first housing 210 may include a first support member 212 extending from at least a portion of the first side surface member 211 to at least a portion of the first space 2101. According to an embodiment, the first support member 212 may be integrated with the first side surface member 211. In some embodiments, the first support member 212 may be provided separately from the first side surface member 211 and structurally coupled to the first side surface member 211.

According to various embodiments, the second side surface member 221 may include a fourth side surface 2211 at least partially corresponding to the first side surface 2111 and having a third length, a fifth side surface 2212 extending from the fourth side surface 2211 in a direction substantially parallel to the second side surface 2112 and having a fourth length greater than the third length, and a sixth side surface 2213 extending from the fifth side surface 2212 to correspond to the third side surface 2113 and having the third length. According to an embodiment, at least a portion of the second side surface member 221 may be formed of a conductive member (e.g., metal). In some embodiments, the second side surface member 221 may be formed by coupling a conductive member and a non-conductive member (e.g., polymer). According to an embodiment, at least a portion of the second side surface member 221 may include a second support member 222 extending to at least a portion of the second space 2201 of the second housing 220. According to an embodiment, the second support member 222 may be integrated with the second side surface member 221. In some embodiments, the second support member 222 may be provided separately from the second side surface member 221 and structurally coupled to the second side surface member 221.

According to various embodiments, the first side surface 2111 and the fourth side surface 2211 may be slidably coupled to each other. According to an embodiment, the third side surface 2113 and the sixth side surface 2213 may be slidably coupled to each other. According to an embodiment, in the slide-in state, the first side surface 2111 may be disposed to be substantially invisible from the outside by overlapping the fourth side surface 2211. According to an embodiment, in the slide-in state, the third side surface 2113 may be disposed to be substantially invisible from the outside by overlapping the sixth side surface 2213. In some embodiments, in the slide-in state, the first and third side surfaces 2111 and 2113 may be disposed to be at least partially visible from the outside. According to an embodiment, in the slide-in state, the first support member 212 may be disposed to be substantially invisible from the outside by overlapping the second support member 222.

According to various embodiments, the first housing 210 may include a first rear surface cover 213 coupled to at least a portion of the first side surface member 211. According to an embodiment, the first rear surface cover 213 may be disposed in a manner of being coupled to at least a portion of the first support member 212. In some embodiments, the first rear surface cover 213 may be integrated with the first side surface member 211. According to an embodiment, the first rear surface cover 213 may be made of polymer, coated or tinted glass, ceramic, metal (e.g., aluminum, stainless steel (STS), or magnesium), or a combination of at least two of these materials. In some embodiments, the first rear surface cover 213 may extend to at least a portion of the first side surface member 211. In some embodiments, at least a portion of the first support member 212 may be replaced with the first rear surface cover 213.

According to various embodiments, the second housing 220 may include a second rear surface cover 223 coupled to at least a portion of the second side surface member 221. According to an embodiment, the second rear surface cover 223 may be disposed in a manner of being coupled to at least a portion of the second support member 222. In some embodiments, the second rear surface cover 223 may be integrated with the second side surface member 221. According to an embodiment, the second rear surface cover 223 may be made of polymer, coated or tinted glass, ceramic, metal (e.g., aluminum, stainless steel (STS), or magnesium), or a combination of at least two of these materials. In some embodiments, the second rear surface cover 223 may extend to at least a portion of the second side surface member 221. In some embodiments, at least a portion of the second support member 222 may be replaced with the second rear surface cover 223.

According to various embodiments, the electronic device 200 may include a flexible display 230 disposed to be supported by at least a portion of the first housing 210 and the second housing 220. According to an embodiment, the flexible display 230 may include a first portion 230a (e.g., a flat portion) that is always visible from the outside, and a second portion 230b (e.g., a bendable portion) extending from the first portion 230a and at least partially accommodated into the second space 2201 of the second housing 220 to be invisible from the outside in the slide-in state. According to an embodiment, the first portion 230a may be disposed so as to be supported by the first housing 210, and the second portion 230b may be disposed so as to be at least partially supported by the bendable member (e.g., the bendable member 240 in FIG. 2E). According to an embodiment, in the state in which the first housing 210 is slid out along the first direction (direction ①), the second portion 230b of the flexible display 230 may extend from the first portion 230a while being supported by the bendable member (e.g., the bendable member 240 in FIG. 4), and may be disposed to form substantially the same plane as the first portion 230a and to be visible from the outside. According to an embodiment, in the state in which the first housing 210 is slid in along the second direction (direction ②), the second portion 230b of the flexible display 230 may be disposed to be accommodated into the second space 2201 of the second housing 220 and to be invisible from the outside. Accordingly, in the electronic device 200, a display area of the flexible display 230 may be variable according to the first housing 210 moving in a sliding manner from the second housing 220 in a predetermined direction (e.g., the ±y-axis direction).

According to various embodiments, the flexible display 230 may be variable in length in the first direction (direction ①) depending on the sliding of the first housing 210 that is moved with respect to the second housing 220. For example, in the slide-in state, the flexible display 230 may have a first display area corresponding to the first length L1 (e.g., the area corresponding to the first portion 230a). According to an embodiment, in the slide-out state, depending on the sliding of the first housing 210 further moved by a second length L2 with respect to the second housing 220, the flexible display 230 may expand to have a second display area (e.g., an area including the first portion 230a and the second portion 230b), which corresponds to a third length L3 longer than the first length L 1 and is larger than the first display area.

According to various embodiments, the electronic device 200 may include at least one of an input device (e.g., a microphone 203-1) disposed in the first space 2101 of the first housing 210, a sound output device (e.g., a phone call receiver 206 and/or a speaker 207), sensor modules 204 and 217, a camera module (e.g., the first camera module 205 or the second camera module 216), a connector port 208, a key input device 219, or an indicator (not illustrated). According to an embodiment, the electronic device 200 may include another input device (e.g., the microphone 203) disposed in the second housing. As another embodiment, the electronic device 200 may be configured such that at least one of the above-mentioned components is omitted or other components are additionally included. As another embodiment, at least one of the above-described components may be disposed in the second space 2201 of the second housing 220.

According to various embodiments, the input device may include a microphone 203 or 203-1. In some embodiments, the input device (e.g., the microphone 203 or 203-1) may include multiple microphones arranged to detect the direction of sound. The sound output device may include, for example, a call receiver 206 and a speaker 207. According to an embodiment, regardless of the slide-in/slide-out state, the speaker 207 may face the outside through at least one speaker hole provided in the first housing 210 at a position always exposed to the outside (e.g., in the second side surface 2112). According to an embodiment, in the slide-out state, the connector port 208 may face the outside through a connector port hole disposed in the first housing 210. In some embodiments, in the slide-in state, the connector port 208 may face the outside through an opening provided in the second housing to correspond to the connector port hole. In some embodiments, the call receiver 206 may include a speaker that operates without a separate speaker hole (e.g., a piezo speaker).

According to various embodiments, the sensor modules 204 and 217 may generate electrical signals or data values corresponding to an internal operating state or an external environmental state of the electronic device 200. The sensor modules 204 and 217 may include, for example, a first sensor module 204 (e.g., a proximity sensor or an illuminance sensor) disposed on the front surface of the electronic device 200 and/or a second sensor module 217 (e.g., a heart rate monitoring (HRM) sensor) disposed on the rear surface of the electronic device 200. According to an embodiment, the first sensor module 204 may be disposed under the flexible display 230 on the front surface of the electronic device 200. According to an embodiment, the first sensor module 204 and/or the second sensor module 217 may include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front surface of the electronic device 200 and a second camera module 216 disposed on the rear surface of the electronic device 200. According to an embodiment, the electronic device 200 may include a flash (not illustrated) located near the second camera module 216. According to an embodiment, the camera modules 205 and 216 may each include one or more lenses, an image sensor, and/or an image signal processor. In an embodiment, the first camera module 205 may be disposed under the flexible display 230 and may be configured to photograph a subject through a portion of an active area (e.g., a display area) of the flexible display 230.

According to various embodiments, the first camera module 205 among the camera modules and some sensor modules 204 among the sensor modules 204 and 217 may be disposed to detect the external environment through the flexible display 230. For example, the first camera module 205 or some sensor modules 204 may be disposed in the first space 2201 of the first housing 210 to be in contact with the external environment through a transmission area or a perforated opening provided in the flexible display 230. According to an embodiment, the area of the flexible display 230, which faces the first camera module 205, may be formed as a transmission area having a predetermined transmittance as a portion of the display area for displaying contents. According to an embodiment, the transmission area may have a transmittance ranging from about 5% to about 20%. The transmission area may include an area overlapping an effective area (e.g., a field of view area) of the first camera module 205 through which light imaged by an image sensor to generate an image passes. For example, the transmission area of the flexible display 230 may include an area having a lower pixel density and/or a lower wire density than the surrounding area. For example, the transmission area may replace the above-mentioned opening. For example, some camera modules 205 may include an under-display camera (UDC). In some embodiments, some sensor module 204 may be disposed to execute their functions in the inner space of the electronic device 200 without being visually exposed through the flexible display 230.

According to various embodiments, the electronic device 200 may include at least one antenna (e.g., the antenna member 253 in FIG. 2E) electrically connected to a wireless communication circuit (e.g., the wireless communication module 192 in FIG. 1) disposed in the second housing 220. According to an embodiment, the electronic device 200 may include a bezel antenna A disposed through the conductive second side surface member 221 of the second housing 220. For example, the bezel antenna A may include a conductive portion 227 disposed in at least a portion of the fifth and sixth side surfaces 2212 and 2213 of the second side surface member 221 and electrically split by one or more split portions 2271 and 2272 made of a non-conductive material (e.g., polymer). According to an embodiment, the wireless communication circuit (e.g., the wireless communication module 192 in FIG. 1) may be configured to transmit or receive a wireless signal in at least one predetermined frequency band (e.g., about 600 MHz to 9,000 MHz) (e.g., a legacy band or NR band) via the conductive portion 227. According to an embodiment, the electronic device 200 may include a side surface cover 2212a disposed on the fifth side surface 2212 to cover at least a portion of at least one split portion 2271. In some embodiments, the bezel antenna A may be disposed on at least one of the fourth side surface 2211, the fifth side surface 2212, and the sixth side surface 2213. In some embodiments, the bezel antenna A may be disposed on at least one of the first side surface 2111, the second side surface 2112, and the third side surface 2113 of the first housing 210. In some embodiments, the electronic device 200 may further include at least one antenna module (e.g., a 5G antenna module or antenna structure) disposed in the inner space (e.g., the first space 2101 or the second space 2201) and configured to transmit or receive a wireless signal of a frequency band ranging from about 3 GHz to 100 GHz via another wireless communication circuit (e.g., the wireless communication module 192 in FIG. 1).

According to various embodiments, the slide-in/slide-out operation of the electronic device 200 may be automatically performed. For example, the slide-in/slide-out operation of the electronic device 200 may be executed through a gear-coupling operation between a drive motor (e.g., the drive motor 260 in FIG. 2E) including a pinion gear disposed in the first space 2101 of the first housing 210 and a rack gear (e.g., the rack gear 2251 in FIG. 2E) disposed in the second space 2201 of the second housing 220 and gear-coupled with the pinion gear 261. For example, when a triggering operation (e.g., occurrence of an event or a drive request signal for a drive motor) for switching from the slide-in state to the slide-out state or from the slide-out state to the slide-in state is detected, a processor (e.g., the processor 120 in FIG. 1) of the electronic device 200 may operate a drive motor (e.g., the drive motor 260 in FIG. 2E) disposed inside the electronic device 200. According to an embodiment, the triggering operation may include selecting (e.g., touching) an object displayed on the flexible display 230, executing a designated function or application, or operating a physical button (e.g., a key button) included in the electronic device 200.

An electronic device 200 according to exemplary embodiments of the disclosure has a design structure in which the drive motor (e.g., the drive motor 260 in FIG. 4) is disposed at an end in the slide-in direction (direction ②) (e.g., the lower end (edge area) of the first housing 210 in the slide-in state) in the first space 2101 of the first housing 210, and the pinion gear (e.g., the pinion gear 261 in FIG. 2E) of the drive motor 260 moves along the rack gear (e.g., the rack gear 2251 in FIG. 4) correspondingly disposed in the second space 2201 of the second housing 220 (e.g., the structure in which the drive motor 260 is disposed at the lower end of the first housing 210 in the slide-in state), thereby providing an increased sliding distance (stroke). In addition, the electronic device 200 may provide an efficient electrical connection structure with the drive motor 260 by including electronic components (e.g., a board or a battery) disposed together with the drive motor 260 in the first space 2101 of the first housing 210. In addition, in the slide-out state, the electronic device 200 may contribute to improving the operational reliability by including a support structure disposed in the second space 2201 of the second housing 220 to support at least a portion of the flexible display 230.

Hereinafter, a detailed description will be made below.

FIG. 2E is an exploded perspective view of the electronic device according to various embodiments of the disclosure.

In describing the electronic device 200 of FIG. 2E, components that are substantially the same as those of the electronic device 200 of FIGS. 2A to 2D may be assigned with the same reference numerals, and a detailed description thereof may be omitted.

Referring to FIG. 2E, the electronic device 200 may include a first housing 210 including a first space 2101, a second housing 220 slidably coupled to the first housing 210 and including a second space (e.g., the second space 2201 of FIG. 2C), a bendable member 240 at least partially rotatably disposed in the second space 2201, a flexible display 230 disposed to be supported by at least a portion of the bendable member 240 and the first housing 210, and a drive module configured to drive the first housing 210 in a direction in which the first housing is to be slid into the second housing 220 (e.g., in the -y-axis direction) and/or in a direction in which the first housing 210 is to be slid out from the second housing 220 (e.g., in the y-axis direction). According to an embodiment, the first housing 210 may include a first side surface member 211, and a first rear surface cover 213 coupled with at least a portion of the first side surface member 211 (e.g., at least a portion of the first support member 212). According to an embodiment, the second housing 220 may include a second side surface member 221, and a second rear surface cover 223 coupled with at least a portion of the second side surface member 221 (e.g., at least a portion of the second support member 221). According to an embodiment, the drive module may include a drive motor 260 disposed in the first space 2101 and including a pinion gear, and a rack gear 2251 disposed in the second space 2201 to be gear-coupled with the pinion gear 261. According to an embodiment, the drive module may further include a reduction module configured to reduce the rotational speed and increase the driving force by being engaged with the drive motor 260. According to an embodiment, the drive motor 260 may be disposed to be supported via at least a portion of a first support member 212 in the first space 2101 of the first housing 210. According to an embodiment, the drive motor 260 may be fixed to the end (e.g., the edge area) of the first support member 212 in the slide-in direction (e.g., the -y-axis direction) in the first space 2101.

According to various embodiments, the electronic device 200 may include multiple electronic components disposed in the first space 2101. According to an embodiment, the multiple electronic components may include a first board 251 (e.g., a main board), and a camera module 216, a socket module 218 (e.g., a SIM tray), a speaker 207, a connector port 208, and a battery B which are arranged around the first board 251. According to an embodiment, the multiple electronic components may be arranged around the first board 251 in the first space 2101 of the first housing 210 together with the drive motor 260, which enables efficient electrical connection.

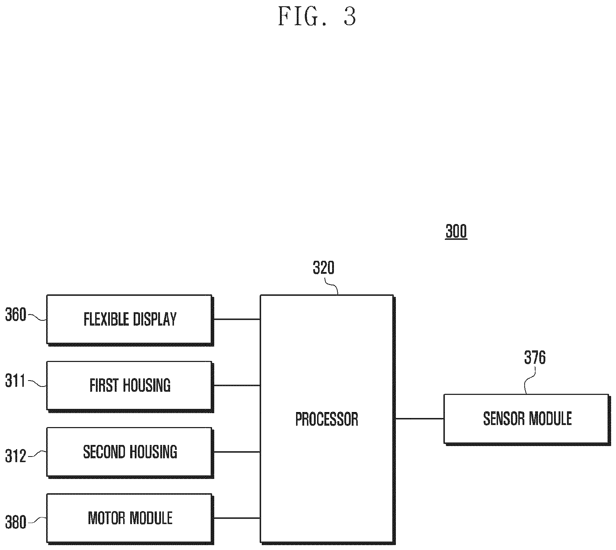

According to various embodiments, the electronic device 200 may include a rear bracket 214 disposed to cover at least some of multiple electronic components disposed between the first support member 212 and the first rear surface cover 213 in the first housing 210. According to an embodiment, the rear bracket 214 may be structurally coupled to at least a portion of the first support member 212. In some embodiments, the rear bracket 214 may be omitted. According to an embodiment, the rear bracket 214 may be disposed to cover the multiple electronic components and to support the first rear surface cover 213. According to an embodiment, the rear bracket 214 may include a notch area 214a or an opening 214a (e.g., a through hole) provided in an area corresponding to the camera module 216 and/or the sensor module (e.g., the sensor module 217 in FIG. 3B). According to an embodiment, the camera module 216 and/or the sensor module 217 may be arranged to detect an external environment through the notch area 214a or the opening 214a. According to an embodiment, the first rear surface cover 213 may be processed to be transparent in an area corresponding to at least the camera module 216 and/or the sensor module 217. In some embodiments, the camera module 216 and/or the sensor module 217 may be configured to operate only when the electronic device 200 is in the slide-out state.

According to various embodiments, the electronic device 200 may include a plate-type support bracket 225 (e.g., a display support bar (DSB)) disposed in the second space 2201 of the second housing 220 and slidably coupled with at least a portion of the first support member 212. According to an embodiment, the support bracket 225 may include an opening 225a with a predetermined size. According to an embodiment, the support bracket 225 may include a support member 2252 disposed at one end and having an outer surface bent in a curved shape to support the rear surface of the bendable member 240, which is bent during the sliding operation. According to an embodiment, the support bracket 225 may include a support plate 2253 configured to support the rear surface of the bendable member 240 in the slide-out state by extending from at least a portion of the support member 2252 to at least a portion of the opening 225a. According to an embodiment, the support bracket 225 may include a rack gear 2251 fixed across the opening 225a and having a length in a direction parallel to the sliding direction. In some embodiments, the rack gear 2251 may be integrated with the support bracket 225. According to an embodiment, the electronic device 200 may include a pair of guide rails 226 disposed on opposite side surfaces of the support bracket 225 to guide the opposite ends of the bendable member 240 in the sliding direction.

According to various embodiments, the second housing 220 may include, in the second support member 222, an opening 222a (e.g., a through hole) disposed in an area corresponding to the camera module 216 and/or the sensor module 217 disposed in the first housing 210 when the electronic device 200 is in the slide-in state. According to an embodiment, when the electronic device 200 is in the slide-in state, the camera module 216 and/or the sensor module 217 may detect an external environment through the opening 222a provided in the second housing 220. In this case, the area of the second rear surface cover 223 corresponding to at least the camera module 216 and/or the sensor module 217 may be processed to be transparent.

According to various embodiments, the electronic device 200 may include a second board 252 (e.g., a sub-circuit board) and an antenna member 253 disposed between the second support member 222 and the second rear surface cover 223 in the second housing 220. According to an embodiment, the second board 252 and the antenna member 253 may be disposed on at least a portion of the second support member 222. In an embodiment, the second board 252 and the antenna member 253 may be electrically connected to the first board 251 via at least one electrical connection member (e.g., a flexible printed circuit board (FPCB) or a flexible RF cable (FRC)). According to an embodiment, the antenna member 253 may include a multi-function coil or multi-function core (MFC) antenna configured to execute a wireless charging function, a neat field communication (NFC) function, and/or an electronic payment function. In some embodiments, the antenna member 253 may be electrically connected to the first board 251 via the second board 252 by being electrically connected to the second board 252.

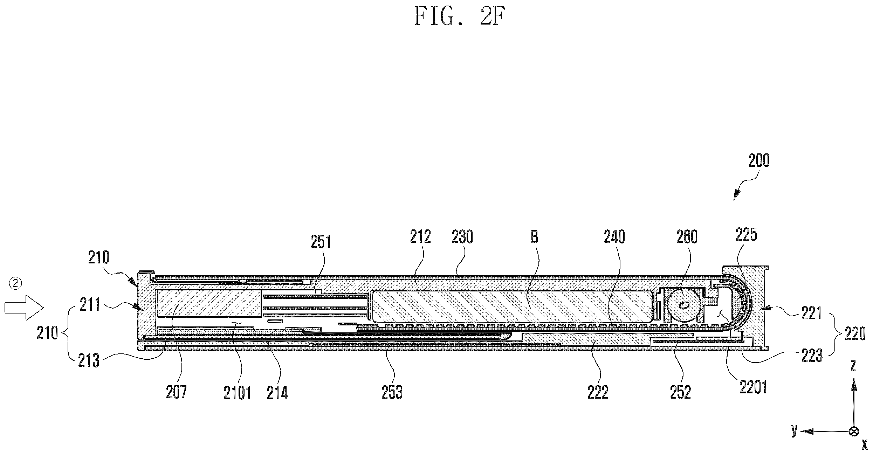

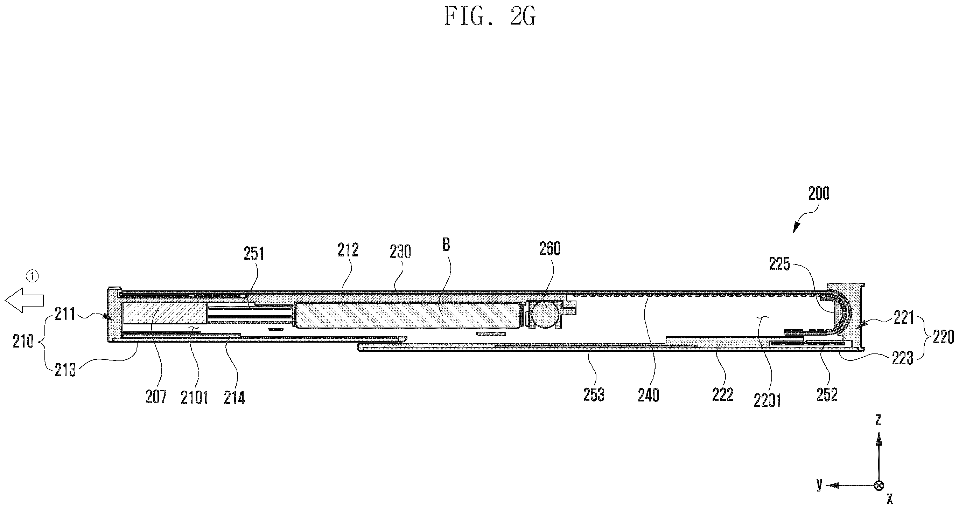

FIG. 2F is a cross-sectional view of the electronic device according to various embodiments of the disclosure taken along line 5a-5a in FIG. 2A. FIG. 2G is a cross-sectional view of the electronic device according to various embodiments of the disclosure taken along line 5b-5b in FIG. 2C.

In describing the electronic device of FIGS. 2F and 2G, the same reference numerals are assigned to components substantially the same as those of the electronic device of FIG. 2E, and a detailed description thereof may be omitted.

Referring to FIGS. 2F and 2G, the electronic device 200 may include a first housing 210 having a first space 2101, a second housing 220 having a second space 2201, a bendable member 240 connected to the first housing 210 and at least partially accommodated in the second space 2201 in a slide-in state, a flexible display 230 disposed to be supported by at least a portion of the bendable member 240 and at least a portion of the first housing 210, and a drive motor 260 disposed in the first space 2101 and including a pinion gear gear-coupled with a rack gear disposed in the second space 2201. According to an embodiment, the drive motor 260 may automatically move the first housing 210 in the slide-in direction (direction ②) or slide-out direction (direction ①) with respect to the second housing 220.

According to various embodiments, in the slide-in state of the electronic device 200 (the state in FIG. 2F), at least a portion of the first housing 210 may be accommodated in the second space 2201 of the second housing 220. According to an embodiment, the first support member 212 may be slidably coupled and guided by the support bracket 225 disposed in the second space 2201. In this case, at least a portion of the flexible display 230 may be disposed to be invisible from the outside by being accommodated in the second space 2201 together with the bendable member 240. In this case, the flexible display 230 may be exposed to the outside of the first housing 210.

According to various embodiments, at least a portion of the first housing 210 may be switched to the slide-out state of being at least partially moved to the outside from the second housing 220 along a first direction (direction ①) through the driving of the drive motor 260. According to an embodiment, in the slide-out state (the state of FIG. 2C) of the electronic device 200, the flexible display 230 may move together with the bendable member 240 while being supported by the support bracket 225, so that the portion slid into the second space 2201 may be at least partially exposed to the outside. In this case, the flexible display 230 may be exposed to the outside of the second housing 220 that is extended from the first housing 210.

According to various embodiments, the drive motor 260 and electronic components (e.g., the first board 251 and the battery B) arranged in the first housing 210 may move together depending on the slide-in/slide-out operation of the first housing 210. Therefore, compared to the arrangement structure in which the corresponding components are arranged in the second housing 220 and connected to the first board 251 via electrical connection members, the number of the electrical connection members may be minimized, thereby contributing to improving the operation reliability of the electronic device 200 and to designing an efficient arrangement of electronic components.

FIG. 3 is a block diagram of an electronic device according to various embodiments.

Referring to FIG. 3, an electronic device 300 (e.g., the electronic device 101 in FIG. 1 or the electronic device 200 in FIGS. 2A to 2G) may include a processor 320 (e.g., the processor 120 in FIG. 1), a flexible display 360 (e.g., the flexible display 230 in FIGS. 2A to 2G), a first housing 311 (e.g., the first housing 210 in FIGS. 2A to 2G), a second housing 312 (e.g., the second housing 220 in FIGS. 2A to 2G), a motor module 380, and/or a sensor module 376 (e.g., the sensor module 176 in FIG. 1). The components included in FIG. 3 correspond to some of the components included in the electronic device 300, and the electronic device 300 may also include various components as illustrated in FIG. 1 and/or FIGS. 2A to 2G.

An object according to various embodiments may be a UI, an icon, a figure, and/or a designated area of an electronic device that is visible or invisible on a screen, and may indicate a UI, an icon, a figure, and/or a designated area that performs a function designated by a user's predetermined action (e.g., swiping and/or touching a designated area of a screen).

For example, an object may be an action inducer, an edge handle, and/or a gesture area. The edge handle may be a UI, an icon, a figure, and/or a designated area that displays the edge panel (e.g., the edge panel that displays a list of applications on a display) in response to a predetermined action (e.g., a swipe gesture action). A gesture area (gesture event) may be a UI, an icon, a figure, and/or a designated area where a designated action (e.g., Samsung Pay, recent home, home, back key, full screen, left handle gesture, right handle Gesture, recent key, menu key, previous application, forward (web browser), open notification panel, open quick panel, screen off, assistance application, or screenshot) is performed in response to a predetermined gesture action being input on the designated area.

For example, a predetermined gesture action may be a swiping action in a predetermined direction (e.g., left, right, up, down, left up, right up, left down, or right down) with respect to the object.

In each drawing, objects are illustrated as being visible on the screen, but the objects indicated in various embodiments of the disclosure may include not only a UI, an icon, a figure, and/or a designated area displayed on the screen of the electronic device, but also a designated area related to performing a designated function that is not displayed on the screen of the electronic device.

The flexible display 360 according to various embodiments may be a display, of which the size of the visual display area outside the electronic device 300 may be variable. The display area may refer to an area where visual information may be displayed. According to various embodiments, the electronic device 300 may display more information on the display 360 as the size of the display area of the display 360 increases. The housing structure of the electronic device 300, which will be described below, is only one example of an electronic device in which the size of the display area may be variable, and the size of the display area of the display 360 may be variable in various ways.

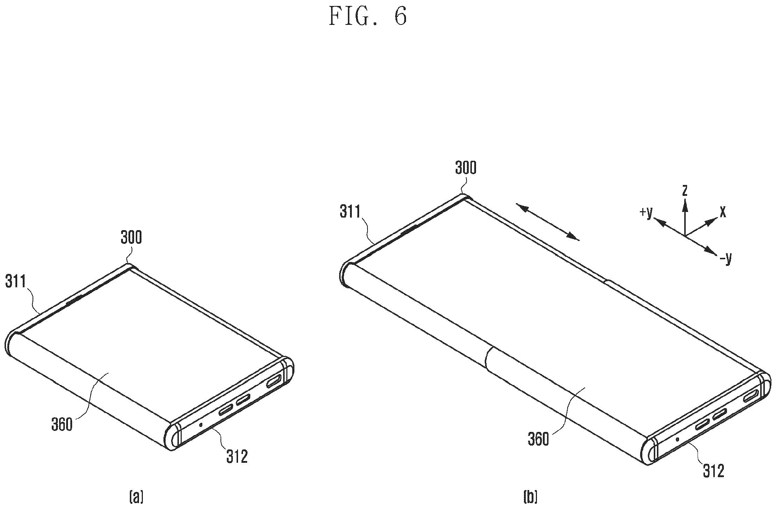

According to various embodiments, the first housing 311 and/or the second housing 312 may be configured to be slidable. For example, the first housing 311 may be arranged to be reciprocable by a predetermined distance in a first direction (e.g., the +y direction in FIG. 6) and/or a second direction (e.g., the -y direction in FIG. 6) with respect to the second housing 312.

According to an embodiment, the first housing 311 and/or the second housing 312 may allow the display area of the flexible display 360 to expand or contract depending on the movement of the first housing 311 relative to the second housing 312. For example, as the first housing 311 moves in the first direction (e.g., the +y direction in FIG. 6) relative to the second housing 312, the display area of the flexible display 360 may expand, and as the second housing 312 moves in the second direction (e.g., the -y direction in FIG. 6) relative to the first housing 311, the display area of the flexible display 360 may contract. At least a portion of the flexible display 360 may constitute the front surface of the electronic device 300. The front surface may refer to a surface oriented in the +z direction based on FIG. 6. At least a portion of the flexible display may be visually exposed to the outside, and the remaining area may be accommodated inside the electronic device 300. The remaining area may be visually exposed to the outside as the first housing 311 moves relative to the second housing 312. For example, at least the portion of the flexible display 360 exposed to the outside of the electronic device 300 may expand (or increase) and/or contract (or decrease). Alternatively, the remaining area of the flexible display 360 slid into the interior of the electronic device 300 may increase and/or decrease.

According to various embodiments, the motor module 380 may cause the first housing 311 to slide such that the first housing 311 is slid into and/or slid out of the second housing 312.

For example, the motor module 380 may include a drive motor 260, a motor gear (e.g., a pinion gear 261), and a gear (e.g., the rack gear 2251 the FIG. 2E). In an embodiment, the drive motor 260 and the motor gear (e.g., a pinion gear 261) may be arranged in a second space including a second housing. In an embodiment, the motor gear (e.g., a pinion gear 261) may mesh with the gear (e.g., the rack gear 2251 in FIG. 2E) and transfer the drive of the drive motor 260 to the gear (e.g., the rack gear 2251 in FIG. 2E). In an embodiment, the drive motor 260 may rotate the motor gear (e.g., the pinion gear 261) based on a signal received from the processor. For example, the gear (e.g., the rack gear 2251 in FIG. 2E) may be arranged in the first space including the first housing, and may cause the first housing to slide by moving linearly depending on the driving of the drive motor 260. For example, the gear (e.g., the rack gear 2251 in FIG. 2E) may convert the rotational motion of the drive motor 260 into linear motion. The gear (e.g., the rack gear 2251 in FIG. 2E) may move the first housing in a linear direction.

According to various embodiments, the electronic device 300 may change its shape associated with the flexible display 360 when an event for shape change (e.g., a slide movement event) occurs. The event for the shape change may include identifying a physical force applied by a user to slide out the flexible display 360 (e.g., a portion of the display is pulled in a predetermined direction), and/or an input to drive electronic components (e.g., the motor module 380) to slide out the flexible display 360.

According to various embodiments, the sensor module 376 may include at least one movement distance detection sensor (e.g., a magnetic sensor, a Hall integrated circuit (IC)) configured to detect the movement distance of the first housing 311 from the second housing 312 of the electronic device 300.

According to an embodiment, the processor 320 may determine the movement distance of the first housing 311 based on sensor information acquired through the sensor module 376. For example, the processor 320 may determine the movement distance of the first housing 311 based on magnetic data (e.g., magnetic strength, number of detected magnetic bodies, and/or phase difference) detected through at least one magnetic sensor (e.g., a Hall IC). For example, the processor 320 may convert magnetic data (e.g., phase difference of each Hall IC) detected by at least one magnetic sensor into length information to determine the movement distance of the first housing 311. For example, the processor 320 may calculate the movement distance of the first housing 311 using the raw data detected from four magnetic sensors (e.g., Hall ICs) using predetermined algorithms (e.g., Kernel (raw data), Native (algorithm), and Framework (length information)).

According to an embodiment, the processor 320 may detect the movement distance in real time while the first housing 311 is moved from the second housing 312 through the sensor module 376, and may control the flexible display 360 to display an object corresponding to the display area that is being changed through the flexible display 360. The sensor module 376 according to various embodiments may include a grip sensor and/or a touch sensor, and may measure a change in a capacitance value according to a contact. The processor 320 may identify the position where the user is gripping the electronic device 300 based on the capacitance value obtained from the sensor module 376. For example, based on the capacitance value of a designated position obtained from the sensor module 376, the processor 320 may identify that the position is being gripped by the user's predetermined finger. The processor 320 may identify that the user is gripping the electronic device 300 with the right hand and/or the left hand at the designated position.

The processor 320 according to various embodiments may determine the characteristics of an object and display the characteristics on the flexible display 360.

The processor 320 according to an embodiment may identify information related to an object and a running application.

The processor 320 according to an embodiment may identify the movement of the first housing 311.

The processor 320 according to an embodiment may identify the movement distance of the first housing 311.

The processor 320 according to an embodiment may determine the characteristics of an object based on the movement distance of the first housing 311, the gripped position, and/or the running application.

The processor 320 according to an embodiment may display the object with the determined characteristics on the flexible display 360.

The specific operation of the processor 320 will be described later with reference to FIG. 4.

FIG. 4 is a flowchart illustrating a method for an electronic device according to various embodiments to determine the characteristics of an object and display the characteristics on a flexible display.

An object according to various embodiments may be related to a user interface (UI), an icon, a figure, and/or a designated area of an electronic device 300 that is visible or invisible on a screen, and may include a UI, an icon, a figure, and/or a designated area that performs a function designated by a user's predetermined action (e.g., swiping and/or touching a designated area of a screen).

According to various embodiments, a processor 320 may, in operation 410, identify information related to an object and a running application.

According to an embodiment, the processor 320 may identify information related to an object. For example, the processor 320 may identify the characteristics of an object (e.g., position, display direction, display form, and display size).

According to an embodiment, the processor 320 may identify information related to the running application. For example, the processor 320 may identify the type (e.g., a keyboard or a pop-up window) and/or position of the running application.

According to various embodiments, the processor 320 may identify the movement of the first housing 311 at operation 420.

According to an embodiment, the processor 320 may identify that a physical force is applied by a user to slide out the flexible display 360 (e.g., a portion of the display 360 is pulled in a predetermined direction), that an object displayed on the flexible display 360 is selected (e.g., a touch), and that the first housing 311 is moved as a result of executing of a designated function or application or due to the operation of a physical button (e.g., a key button) included in the electronic device 300.

According to an embodiment, the processor 320 may control the drive motor to move the first housing 311 in response to a user input that instructs the first housing 311 to move.

According to an embodiment, the processor 320 may obtain a user input that instructs the first housing 311 to move. For example, the processor 320 can obtain a user input that includes a command for the first housing 311 to slide in and/or slide out relative to the second housing 312. The user input may include at least one of a button input, a touch input, a gesture input, an external input from an external electronic device (e.g., an electronic pen (s-pen)) such as hover, air gesture, or air pointer, an input via wireless communication (e.g., a BT button), a sound input, and a predetermined context. For example, the processor 320 may obtain an input of pressing a first button corresponding to an operation of slide-in of the first housing 311 relative to the second housing 312 and/or an input of pressing a second button corresponding to an operation of slide-out of the first housing 311 relative to the second housing 312. For example, the processor 320 may obtain an input of selecting (e.g., touching) an object displayed on the display 360 corresponding to an operation of slide-in and/or slide-out of the first housing 311 relative to the second housing 312. For example, the processor 320 may obtain an input to execute a function or application program related to an operation of slide-in and/or slide-out of the first housing 311 relative to the second housing 312. For example, the processor 320 may obtain an external input (hover, air gesture, or air pointer) corresponding to an operation of slide-in and/or slide-out of the first housing 311 of an external electronic device (e.g., an s-pen) relative to the second housing 312. For example, the processor 320 can obtain a sound input that includes a command for the first housing 311 to slide in and/or slide out relative to the second housing 312. For example, the processor 320 may identify a designated context (TPO, time, place, or occasion) corresponding to an operation in which the first housing 311 slides in and/or slides out relative to the second housing 312.

According to an embodiment, the processor 320 may control the motor module 380 to cause the first housing 311 to slide in and/or slide out relative to the second housing 312 based on a user input. For example, the motor module 380 may include a drive motor (e.g., the drive motor 260 in FIG. 2E), a motor gear (e.g., the pinion gear 261), and a gear (e.g., the rack gear 2251 in FIG. 2E). In an embodiment, the drive motor 260 and the motor gear (e.g., a pinion gear 261) may be arranged in a second space including the second housing 312. In an embodiment, the motor gear (e.g., the pinion gear 261) may mesh with the gear (e.g., the rack gear 2251 in FIG. 2E) and transfer the drive of the drive motor 260 to the gear (e.g., the rack gear 2251 in FIG. 2E). In an embodiment, the drive motor 260 may rotate the motor gear (e.g., the pinion gear 261) based on a signal received from the processor 320. For example, the gear (e.g., the rack gear 2251 in FIG. 2E) may be arranged in the first space including the first housing 311, and may cause the first housing 311 to slide by moving linearly depending on the driving of the drive motor 260. For example, the gear (e.g., the rack gear 2251 in FIG. 2E) may convert the rotational motion of the drive motor 260 into linear motion. The gear (e.g., the rack gear 2251 in FIG. 2E) may move the first housing 311 in a linear direction. For example, the first housing 311 may slide in and/or slide out relative to the second housing 312 depending on the operation of the motor module 380. For example, the processor 320 may control the motor module 380 to move the first housing 311 in a first direction (e.g., the -y direction in FIG. 6) relative to the second housing 312. For example, the processor 320 may control the motor module 380 to move the first housing 311 in a second direction (e.g., the +y direction in FIG. 6) relative to the second housing 312.

According to an embodiment, the display 360 may have a display area of the display that may expand or contract as the first housing 311 moves relative to the second housing 312. For example, as the first housing 311 moves in the first direction (e.g., the -y direction in FIG. 6) relative to the second housing 312, the display area of the display 360 may contract, and as the first housing 311 moves in the second direction (e.g., the +y direction in FIG. 6) relative to the second housing 312, the display area of the flexible display 360 may expand. At least a portion of the display 360 may constitute the front surface of the electronic device 300. At least a portion of the flexible display may be visually exposed to the outside, and the remaining area may be accommodated inside the electronic device 300. A portion of the accommodated remaining area may be visually exposed to the outside as the first housing 311 moves in the second direction (e.g., the +y direction) relative to the second housing 312.

According to various embodiments, the processor 320 may identify the movement distance of the first housing 311 at operation 430.

According to an embodiment, the processor 320 may identify the movement distance of the first housing 311 corresponding to the linear motion of the first housing 311 relative to the second housing 312.

According to an embodiment, the processor 320 may identify the movement distance of the first housing 311 based on the angle factor of the drive motor 260. For example, the first housing 311 can perform a linear motion corresponding to the rotation of the drive motor 260. The processor 320 may obtain the angle factor of the drive motor 260 corresponding to the vertical linear motion of the first housing 311.

According to an embodiment, the processor 320 may identify the movement distance of the first housing 311 based on the sensor information acquired through the sensor module 376. According to various embodiments, the processor 320 may define the characteristics of an object based on the movement distance of the first housing 311, the gripped position, and/or the running application at operation 440.

According to an embodiment, the processor 320 may determine the position where the user is gripping the electronic device 300. For example, the electronic device 300 may obtain information related to the position related to an area of the electronic device 300 where the user is gripping the electronic device 300 from the sensor module 376. The sensor module 376 may include a grip sensor and/or a touch sensor, and may measure a capacitance value according to a contact. The processor 320 may identify the position where the user is gripping the electronic device 300 based on the capacitance value obtained from the sensor module 376. For example, based on the capacitance value of a designated position obtained from the sensor module 376, the processor 320 may identify that the position is being gripped by the user's predetermined finger. The processor 320 may identify that the user is gripping the electronic device 300 with the right hand and/or the left hand at the designated position.

According to an embodiment, the processor 320 may determine the characteristics (e.g., position, direction, shape, and/or size) of an object based on the grip position and/or the running application identified at operation 410 in response to the movement distance of the first housing 311 identified at operation 430 being greater than or equal to a predetermined distance.

According to an embodiment, the processor 320 may determine the gripped position corresponding to the user's finger (e.g., thumb) as the position of the object in response to the first housing 311 moving by a predetermined distance or more.

According to an embodiment, in response to the first housing 311 moving a predetermined distance or more and the gripped position corresponding to the user's thumb overlapping at least a portion of the running application (e.g., keyboard application or PIP application), the processor 320 may determine the characteristics of the object based on the predetermined rule such that the position of an object and the position of an application do not overlap. For example, the predetermined rule may include moving the position of the object in a predetermined direction so that the position of the object and the position of the keyboard application do not overlap. For example, the predetermined rule may include moving the position of a PIP application in a predetermined direction so that the position of the object and the position of the PIP application do not overlap.

According to various embodiments, the processor 320 may display an object with determined characteristics on the display 360 at operation 450.

According to an embodiment, the processor 320 may display an object on the flexible display 360 based on the characteristics (e.g., position, direction, shape, and/or size) of the object determined at operation 440.

For example, the processor 320 may configure a screen frame to be output to the display area through a rendering process in response to a change in the display area of the flexible display 360 as the first housing 311 moves. The processor 320 may configure a screen frame to be output to a variable display area based on the characteristics of the object determined at operation 440.

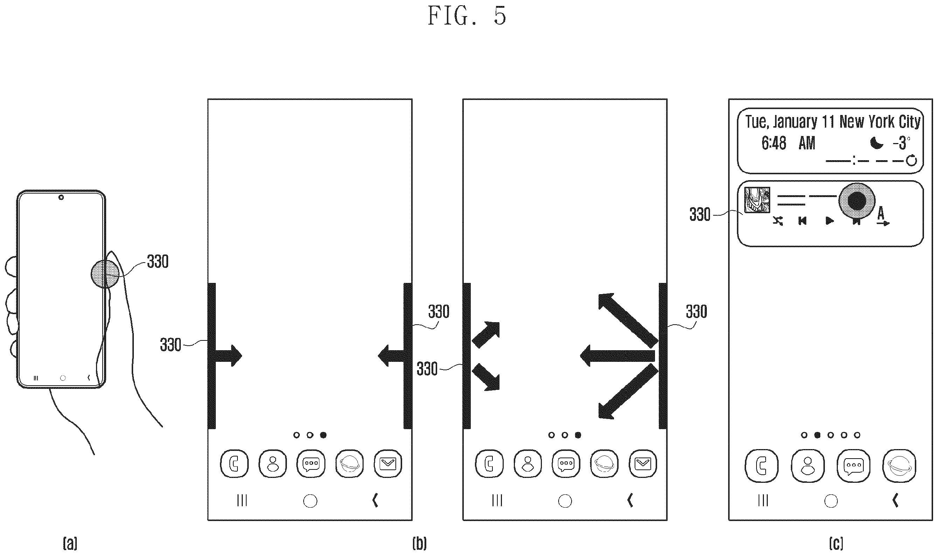

FIG. 5 is a view illustrating examples of objects according to various embodiments.
(a) of FIG. 5 may illustrate an example of an object 330.

The object 330 according to various embodiments may be related to a user interface (UI), an icon, a figure, and/or a designated area of an electronic device 300 that is visible or invisible on a screen, and may include a UI, an icon, a figure, and/or a designated area that performs a function designated by a user's predetermined action (e.g., swiping and/or touching a designated area of a screen).

Although the object 330 is illustrated as an example in (a) of FIG. 5, objects 330 indicated in various embodiments of the disclosure may include not only a UI, an icon, a figure, and/or a designated area displayed on the screen of the electronic device 300, but also a designated area related to performing a designated function that is not displayed on the screen of the electronic device 300.

(b) of FIG. 5 may illustrate an example of a predetermined gesture action for an object 330.

For example, a predetermined gesture action may be a swiping action in a predetermined direction (e.g., left, right, up, down, left up, right up, left down, or right down) for the object 330.

(c) of FIG. 5 may illustrate an example of one or more one widgets as an embodiment of an object 330. According to an embodiment, the widgets may be displayed so that at least some of them overlap (stacked) with each other. As an example, the widgets may include a relatively small graphical user interface (GUI) (or a relatively small window) that executes an application and displays the execution result of the application.

FIG. 6 is a view illustrating an example in which a display area of the display changes depending on the movement of a first housing, according to various embodiments.

According to various embodiments, the electronic device 300 may change its shape associated with the flexible display 360 when an event for shape change e.g., a slide movement event) occurs. The event for the shape change may include identifying a physical force applied by a user to slide out the flexible display 360 (e.g., a portion of the display is pulled in a predetermined direction), and/or an input to drive electronic components (e.g., the motor module 380) to slide out the flexible display 360.

According to an embodiment, the processor 320 may control the motor module to cause the first housing 311 to slide in and/or slide out relative to the second housing 312 based on a user input.

For example, the first housing 311 may slide in and/or slide out relative to the second housing 312 depending on the operation of the motor. For example, the processor 320 may control the motor to move the first housing 311 in a first direction (e.g., the -y direction) relative to the second housing 312. For example, the processor 320 may control the motor to move the first housing 311 in a second direction (e.g., the +y direction) relative to the second housing 312.

According to an embodiment, the display 360 may have a display area that may expand or contract as the first housing 311 moves relative to the second housing 312.

As the first housing 311 moves in the second direction (e.g., the +y direction) relative to the second housing 312, the display area of the display 360 may expand as illustrated in the change from (a) to (b) of FIG. 6.

As the first housing 311 moves in the first direction (e.g., the -y direction) relative to the second housing 312, the display area of the display 360 may contract as illustrated in the change from (b) to (a) of FIG. 6.

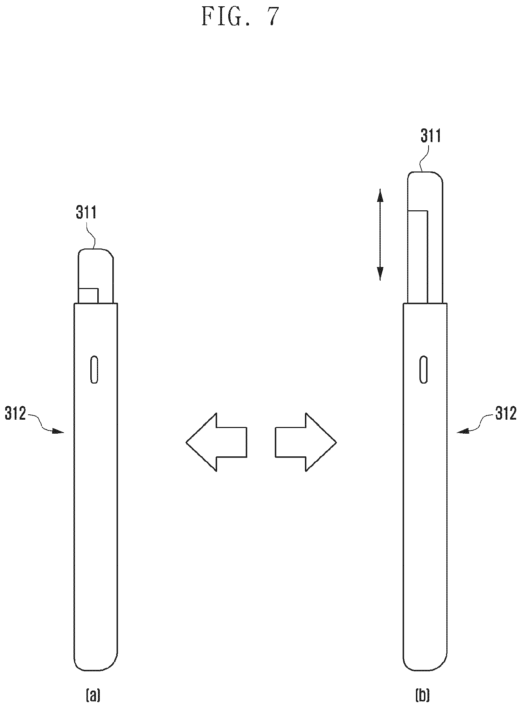

FIG. 7 is a view illustrating an example of a change in the movement distance of the first housing relative to the second housing, according to various embodiments.
(a) of FIG. 7 may illustrate an example when the electronic device is in the state in which the first housing 311 is maximally slid into the second housing 312.
(b) of FIG. 7 may illustrate an example when the electronic device is in the state in which the first housing 311 is maximally slid out of the second housing 312.

According to an embodiment, the processor 320 may identify a movement distance (distance factor) of the first housing 311 corresponding to the linear motion of the first housing 311 relative to the second housing 312.

According to an embodiment, the processor 320 may identify the movement distance of the first housing 311 based on the angle factor of the drive motor 260. For example, the first housing 311 can perform a linear motion corresponding to the rotation of the drive motor 260. The processor 320 may obtain the angle factor of the drive motor 260 corresponding to the vertical linear motion of the first housing 311.

According to an embodiment, the processor 320 may determine the movement distance of the first housing 311 based on sensor information acquired through the sensor module 376. According to an embodiment, the sensor module 376 may include at least one movement distance detection sensor (e.g., a magnetic sensor, a Hall integrated circuit (IC)) configured to detect the movement distance of the first housing 311 from the second housing 312 of the electronic device 300.

According to an embodiment, the processor 320 may identify the movement distance of the first housing 311 based on sensor information acquired through the sensor module 376. For example, the processor 320 may identify the movement distance of the first housing 311 based on magnetic data (e.g., magnetic strength, number of detected magnetic bodies, and/or phase difference) detected through at least one magnetic sensor (e.g., a Hall IC). For example, the processor 320 may convert magnetic data (e.g., phase difference of each Hall IC) detected by at least one magnetic sensor into length information to identify the movement distance of the first housing 311. For example, the processor 320 may calculate the movement distance of the first housing 311 using the raw data detected from four magnetic sensors (e.g., Hall ICs) using predetermined algorithms (e.g., Kernel (raw data), Native (algorithm), and Framework (length information)).

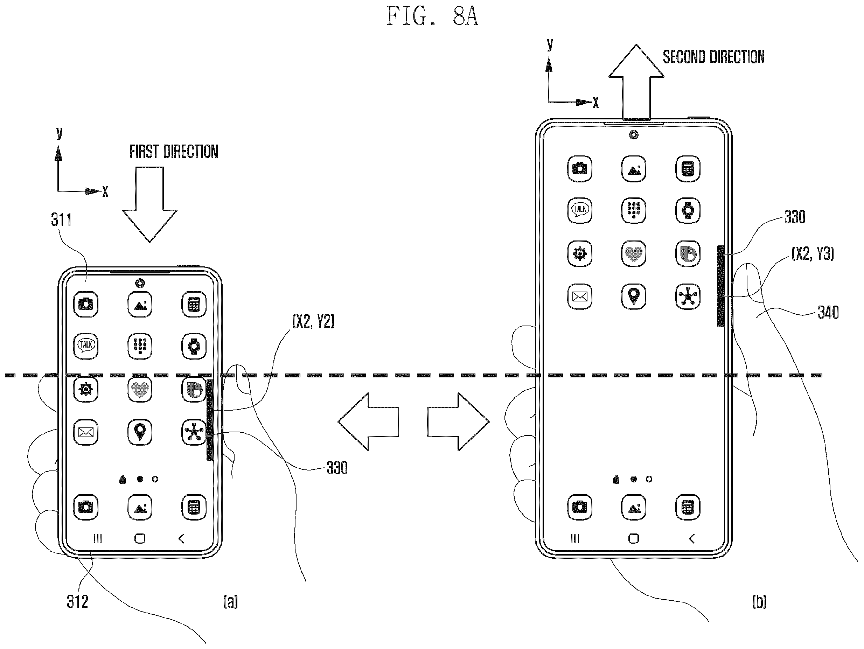

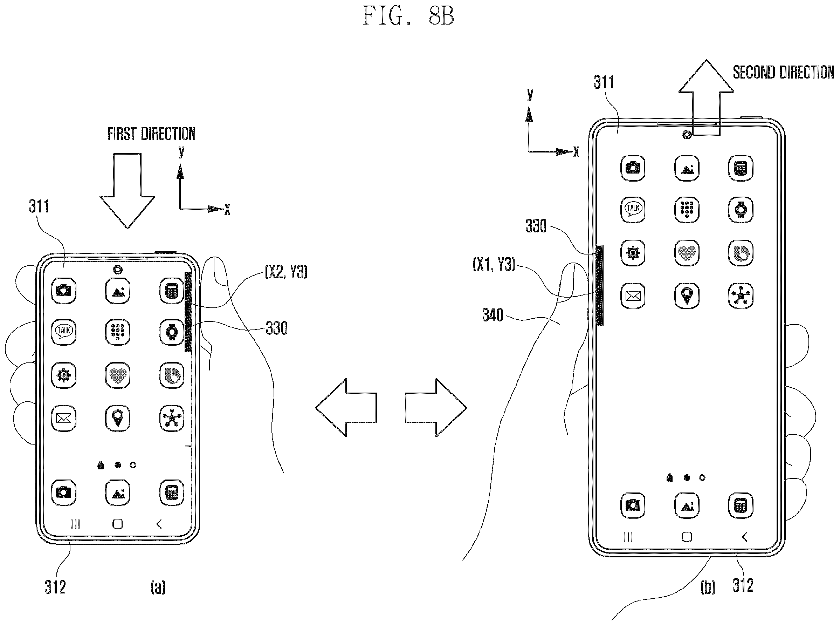

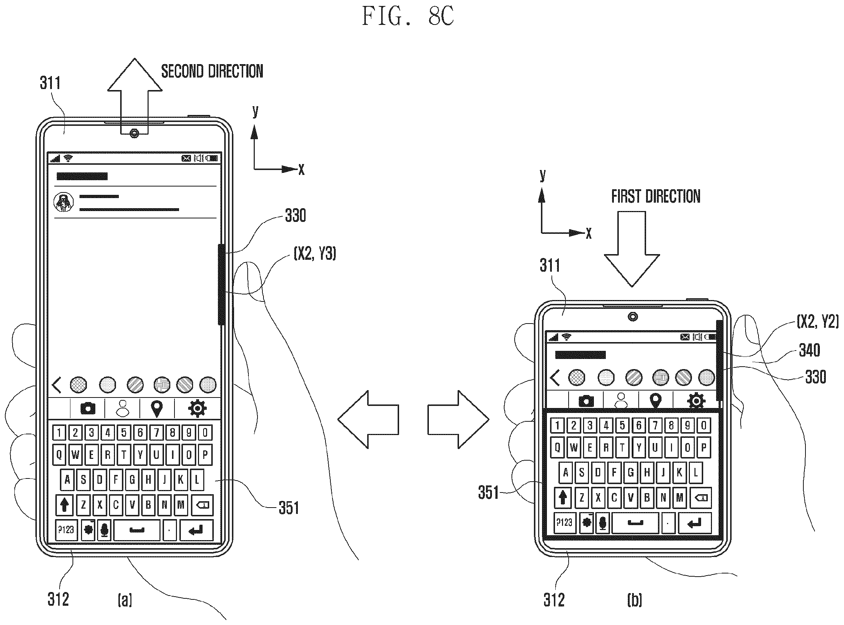

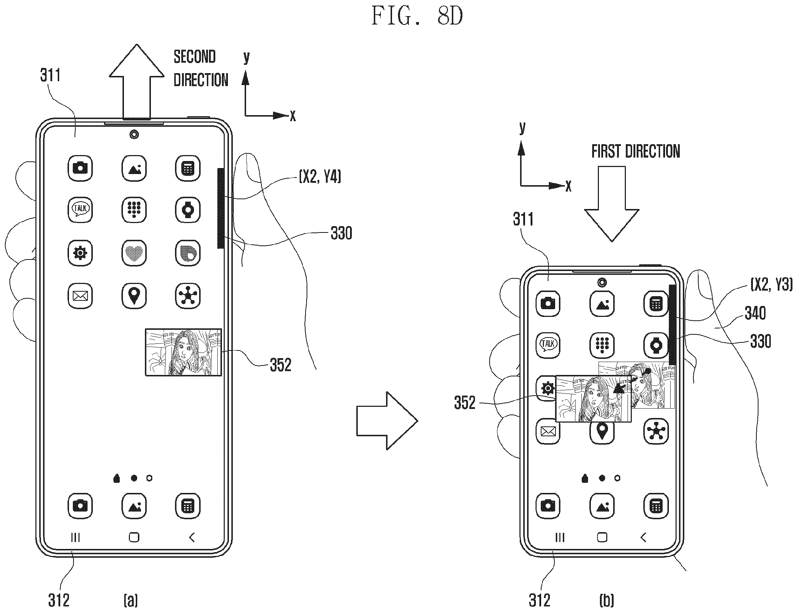

FIGS. 8A, 8B, 8C, and 8D are views illustrating examples of how an electronic device 300 according to various embodiments determines the characteristics of an object 330 based on the movement distance of the first housing 311, the running application, and/or the gripped position.

According to an embodiment, the processor 320 may identify the position where the user is gripping the electronic device 300. For example, the electronic device 300 may obtain information related to a position where a user is gripping the electronic device 300 from a sensor module 376. The sensor module 376 may include a grip sensor and/or a touch sensor, and may measure a capacitance value. The processor 320 may identify the position where the user is gripping the electronic device 300 based on the capacitance value obtained from the sensor module 376. For example, based on the capacitance value of a designated position obtained from the sensor module 376, the processor 320 may identify that the position is being gripped by the user's predetermined finger. The processor 320 may identify that the user is gripping the electronic device 300 with the right hand and/or the left hand at the designated position.

FIG. 8A is a view illustrating an example of how the electronic device 300 according to various embodiments determines the characteristics of an object 330 based on the movement distance of the first housing 311 and/or the gripped position.

According to an embodiment, in response to the first housing 311 moving a predetermined distance or more, the processor 320 may determine the gripped position corresponding to the user's thumb as the position of the object 330.

Referring to (a) of FIG. 8A, in response to the first housing 311 moving a predetermined distance or more in the first direction, the processor 320 may determine the position (X2, Y2), which corresponds to the position gripped by the user's thumb, as the position of the object 330.

Referring to (b) of FIG. 8B, in response to the first housing 311 moving a predetermined distance or more in the second direction, the processor 320 may determine the position (X2, Y3), which corresponds to the position 340 gripped by the user's thumb, as the position of the object 330.

FIG. 8B is a view illustrating an example of how the electronic device 300 according to various embodiments determines the characteristics of an object 330 based on the movement distance of the first housing 311 and/or the gripped position.

According to an embodiment, in response to the first housing 311 moving a predetermined distance or more, the processor 320 may determine the gripped position corresponding to the user's thumb as the position of the object 330.

Referring to (a) of FIG. 8B, the object 330 may be located at the position (X2, Y3).

Referring to (b) of FIG. 8B, in response to the first housing 311 moving a predetermined distance or more in the second direction, the processor 320 may determine the position (X1, Y3), which corresponds to the position 340 gripped by the user's thumb, as the position of the object 330. For example, in response to gripping the electronic device 300 with the left hand, the position (X1, Y3), which corresponds to the position 340 gripped by the user's left thumb in the left area of the electronic device 300, may be determined as the position of the object 330.

FIG. 8C is a view illustrating an example of how the electronic device 300 according to various embodiments determines the characteristics of an object 330 based on the movement distance of the first housing 311, the running application, and/or the gripped position.

According to an embodiment, in response to the first housing 311 moving a predetermined distance or more, and the gripped position corresponding to the user's thumb overlapping at least a portion of the running application (e.g., a keyboard application (soft input panel (SIP) 351), the processor 320 may determine the characteristics of the object 330 based on the predetermined rule.

Referring to (a) of FIG. 8B, the object 330 may be located at the position (X2, Y3).

Referring to (b) of FIG. 8C, in response to the first housing 311 moving a predetermined distance or more in the first direction and the gripped position 340 corresponding to the user's thumb overlapping at least a portion of the application 351, the processor 320 may determine the position (X2, Y2) as the position of the object 330 so that the position of the object 330 does not overlap the position of the application 351.

FIG. 8D is a view illustrating an example of how the electronic device 300 according to various embodiments determines the characteristics of an object 330 based on the movement distance of the first housing 311, the running application, and/or the gripped position.

According to an embodiment, in response to the first housing 311 moving a predetermined distance or more, and the gripped position corresponding to the user's thumb overlapping at least a portion of the running application (e.g., a pop-up application (or pop-up window or widget 352), the processor 320 may determine the characteristics of the object 330 based on the predetermined rule.

Referring to (a) of FIG. 8D, the object 330 may be located at the position (X2, Y4).

Referring to (b) of FIG. 8D, in response to the first housing 311 moving a predetermined distance or more in the first direction and the grip position 340 corresponding to the user's thumb overlapping at least a portion of the application 352, the processor 320 may determine the position of the object 330 as the position X2, Y3) which is the gripped position 340 and may also change the position of the application 352.

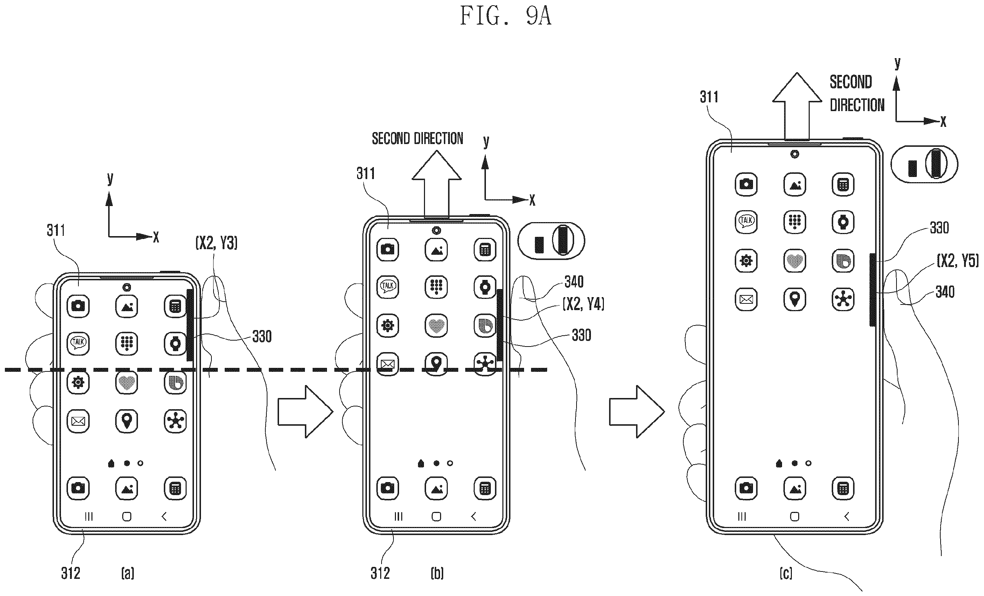

FIG. 9A is a view illustrating an example of how an electronic device according to various embodiments displays an object with determined characteristics on a display.

The electronic device 300 according to various embodiments may include a flexible display in which the display area 360 changes in response to the movement distance of the first housing 311 relative to the second housing 312. For example, (a) of FIG. 9A may illustrate a state in which the first housing 311 is maximally slid into the second housing 312, (b) of FIG. 9A may illustrate a state in which the first housing 311 is partially slid out of the second housing 312, and (c) of FIG. 9A may illustrate a state in which the first housing 311 is fully slid out of the second housing 312.

According to an embodiment, in response to the first housing 311 moving a predetermined distance or more, the processor 320 may determine the gripped position corresponding to the user's thumb as the position of the object 330.

Referring to (a) of FIG. 9A, the object 330 may be located at the position (X2, Y3).

Referring to (b) of FIG. 9A, in response to the first housing 311 moving a predetermined distance or more in the second direction, the processor 320 may determine the position (X2, Y4), which corresponds to the position 340 gripped by the user's thumb, as the position of the object 330.

Referring to (c) of FIG. 9A, in response to the first housing 311 moving a predetermined distance or more in the second direction, the processor 320 may determine the position (X2, Y5), which corresponds to the position 340 gripped by the user's thumb, as the position of the object 330.

According to an embodiment, the processor 320 may display an object 330 on the display 360 based on the determined characteristics (e.g., position, direction, shape, and/or size) of the object 330.

For example, in response to the display area of the display 360 changing as the first housing 311 moves, the processor 320 may reconfigure the screen frame to be output to a modified display area through a rendering process. The processor 320 may reconfigure the screen frame to be output to the modified display area based on the determined characteristics of the object 330.

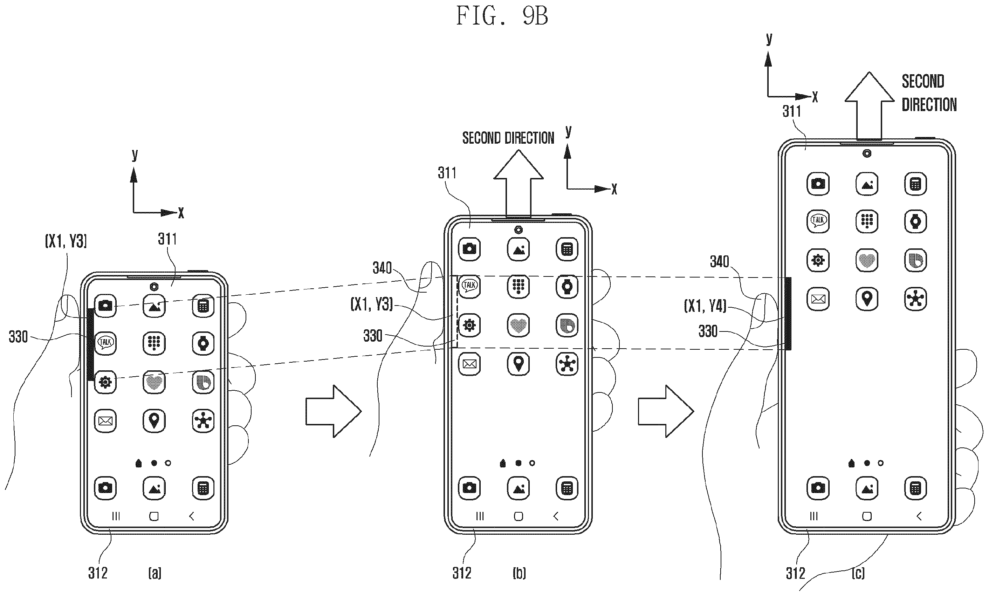

FIG. 9B is a view illustrating an example of how an electronic device according to various embodiments displays an object with determined characteristics on a display.

The electronic device 300 according to various embodiments may include a flexible display in which the display area changes in response to the movement distance of the first housing 311 relative to the second housing 312. For example, (a) of FIG. 9B may illustrate a state in which the first housing 311 is maximally slid into the second housing 312, (b) of FIG. 9B may illustrate a state in which the first housing 311 is partially slid out of the second housing 312 while being moved in the second direction, and (c) of FIG. 9B may illustrate a state in which the movement of the first housing 311 is completed and the first housing 311 is fully slid out of the second housing 312.

According to an embodiment, in response to the first housing 311 moving a predetermined distance or more, the processor 320 may determine the gripped position corresponding to the user's thumb as the position of the object 330.

Referring to (a) of FIG. 9B, the object 330 may be displayed in a predetermined shape at the position (X1, Y3).

Referring to (b) of FIG. 9B, in response to the first housing 311 moving in the second direction, the processor 320 may not scan the position gripped by the user's thumb. As a result, the coordinates of the object 330 may be fixed at (X1, Y3). In response to the first housing 311 moving in the second direction, the processor 320 may determine the transparency, color, and/or effect-related form of the object 330. For example, during the movement of the first housing 311, the processor 320 may determine that the object 330 is in a transparent form, or in a form where the transparency gradually changes (e.g., more transparent than the object illustrated in (a) of FIG. 9B). For example, during the movement of the first housing 311, the processor 320 may determine that the object 330 is in a form where its color changes. For example, during the movement of the first housing 311, the processor 320 may determine that the object 330 is in a form where its length changes. For example, during the movement of the first housing 311, the processor 320 may determine that the object 330 is in a form where its area changes. For example, during the movement of the first housing 311, the processor 320 may determine that the object 330 is in a form where its color changes (e.g., a color different from the object illustrated in (a) of FIG. 9B).

For example, during the movement of the first housing 311, the processor 320 may determine that the object 330 is in a form where an effect (e.g., a highlight effect and/or a blinking effect applied to the object illustrated in (a) of FIG. 9B) is applied.

Referring to (c) of FIG. 9B, in response to the completion of the movement of the first housing 311, the processor 320 may determine the position (X1, Y4), where the user's thumb is gripping, as the position of the object 330, and may determine that the object 330 is in a designated form (e.g., the same form as the object shown in (a) of FIG. 9B).

According to an embodiment, the processor 320 may display an object 330 on the display 360 based on the determined characteristics (e.g., position, direction, shape, and/or size) of the object 330.

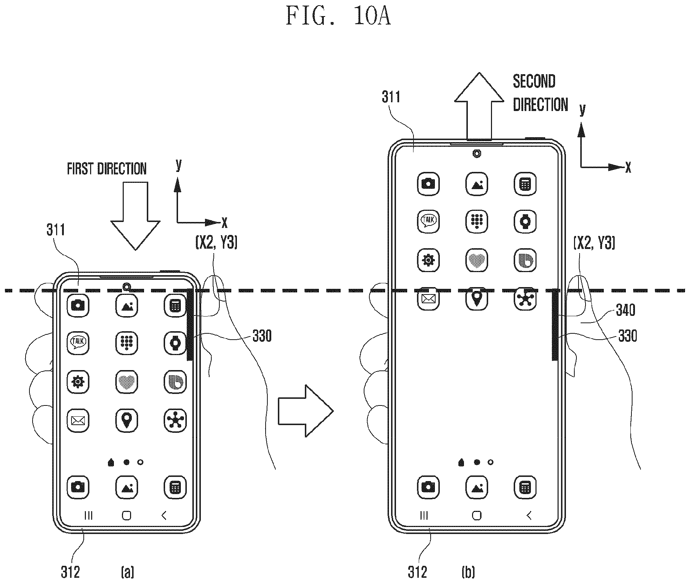

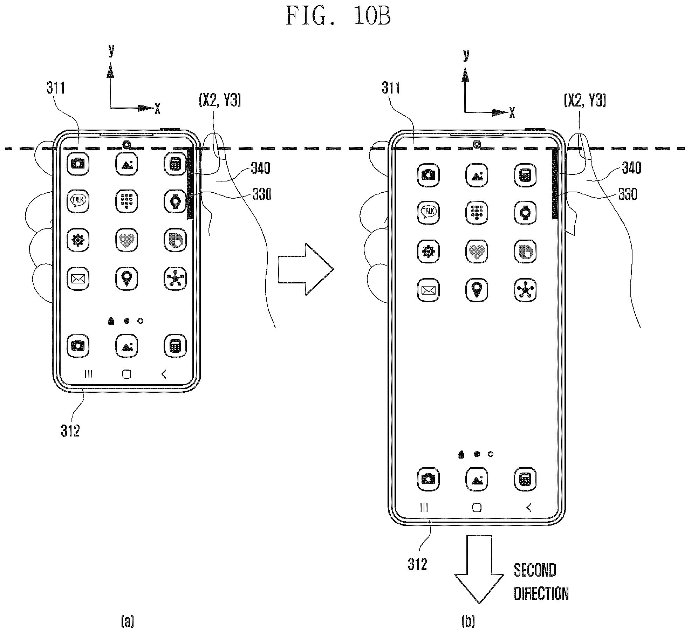

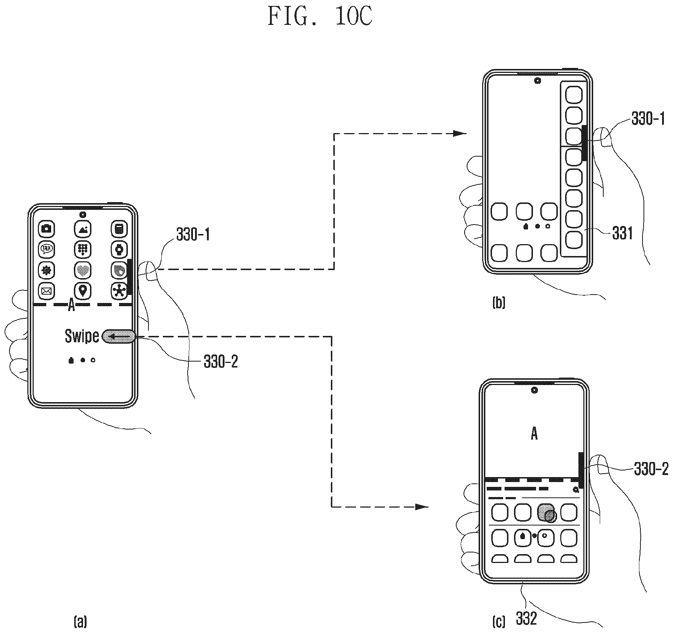

FIGS. 10A, 10B, and 10C are views illustrating examples of how an electronic device 300 according to various embodiments determines the characteristics of an object 330 based on the movement distance of the first housing 311, the running application, and/or the gripped position.

FIG. 10A is a view illustrating an example of how the electronic device 300 according to various embodiments determines the characteristics of an object 330 based on the movement distance of the first housing 311 and/or the gripped position.

According to an embodiment, in response to the first housing 311 moving a predetermined distance or more, the processor 320 may determine the gripped position corresponding to the user's thumb as the position of the object 330.

Referring to (a) of FIG. 10A, the object 330 may be located at the position (X2, Y3).

Referring to (b) of FIG. 10A, in response to the first housing 311 moving a predetermined distance or more in the second direction, the processor 320 may determine the position (X2, Y3), which corresponds to the position 340 gripped by the user's thumb, as the position of the object 330.

In the case of FIG. 10A, in the state in which a part of the user's palm grips the lower end portion of the electronic device 300, when the position 340 gripped by the fingers of the same hand remains the same, the position (X2, Y3) of the object 330 may also remain the same.

FIG. 10B is a view illustrating an example of how the electronic device 300 according to various embodiments determines the characteristics of an object 330 based on the movement distance of the second housing 312 and/or the gripped position.

In the electronic device 300 illustrated in FIG. 10B, the second housing 312 may move in the first direction and/or the second direction with respect to the first housing 311.

According to an embodiment, in response to the second housing 312 moving a predetermined distance or more, the processor 320 may determine the gripped position corresponding to the user's thumb as the position of the object 330.

Referring to (a) of FIG. 10B, the object 330 may be located at the position (X2, Y3).

Referring to (b) of FIG. 10B , in response to the second housing 312 moving a predetermined distance or more in the second direction, the processor 320 may determine the position (X2, Y3), which corresponds to the position 340 gripped by the user's thumb, as the position of the object 330.

FIG. 10C illustrates an example related to the characteristics of a determined object in the electronic device 300 according to various embodiments.

According to an embodiment, the processor 320 may determine the characteristics of an object 330-1 and/or an object 330-2.

Referring to (a) of FIG. 10C, the processor 320 may display a first object 330-1 and/or a second object 330-2. For example, the second object 330-2 may be an object that indicates a predetermined gesture (e.g., a swipe action).

Referring to (b) of FIG. 10C, as the user performs a predetermined gesture in an area (e.g., the upper end area) adjacent to the area including the first object 330-1, the processor 320 may display a first edge panel 331. Referring to (c) of FIG. 10C, as the user performs a predetermined gesture in an area (e.g., the lower end area) adjacent to the area including the second object 330-2, the processor 320 may display a second edge panel 332. According to an embodiment, the second edge panel 332 may include a list of applications to be run in multiple windows by dividing the display screen into two parts.

According to various embodiments, an electronic device may include a first housing, a second housing, a flexible display having a display area that changes depending on linear movement of the first housing with respect to the second housing, a motor module at least operatively connected to the first housing and configured to drive the first housing to slide relative to the second housing, a sensor module, and a processor. The processor may be configured to identify information related to an object and a running application, identify a movement of the first housing, identify a movement distance of the first housing, identify, from the sensor module, a position at which a user grips the electronic device, and determine a position corresponding to the gripped position as a position of an object in response to the first housing moving a predetermined distance or more and the display area of the flexible display changing. The obj ect may perform a function designated by a user's predetermined operation, and may include at least one of a visible or invisible user interface (UI) on a screen, an icon, a figure, and a specific area of the electronic device.

In the electronic device according to various embodiments, the processor may be configured to obtain a user input that instructs the first housing to slide into or out of the second housing, and control the motor module based on the user input. The first housing may slide into or out from the second housing by operation of the motor module.

In the electronic device according to various embodiments, the user input may include at least one of a button input, a touch input, a gesture input, an external input from an external electronic device (e.g., an S-pen) such as hover, air gesture, or air pointer, an input via wireless communication (e.g., a BT button), and a predetermined context.

In the electronic device according to various embodiments, the motor module may include a drive motor configured to cause linear motion of the first housing in response to its rotation, and the processor may be configured to identify the movement distance of the first housing based on a rotation angle coefficient of the drive motor included in the motor module.

In the electronic device according to various embodiments, the above sensor module may include a grip sensor and/or a touch sensor to measure a capacitance value according to a contact, and the processor may be configured to identify the position where the user grips the electronic device based on the capacitance value.

In the electronic device according to various embodiments, the processor may be configured to determine the position of the object to be a position that does not overlap a position of the application, in response to a partial overlap between the gripped position and the position of the application.

In the electronic device according to various embodiments, the processor may be configured to determine a position corresponding to the gripped position as the position of the object in response to a partial overlap between the gripped position and the position of the application, and change the position of the application to a position that does not overlap the position of the object.

In the electronic device according to various embodiments, the processor may be configured to display the object on the flexible display at the determined position of the object.

In the electronic device according to various embodiments, the processor may be configured to determine that, during the movement of the first housing, the object is in at least one selected from a form of changing a color of the object, a form of changing a transparency of the object, and a form of changing an effect of the object, and the effect may include a highlight effect or a blinking effect for the object.

In the electronic device according to various embodiments, the processor may be configured to configure a screen frame to be output to the display area through a rendering process in response to a change in display area of the flexible display as the first housing moves, and configure the screen frame to be output to the display area based on the object.

In a method for operating an electronic device according to various embodiments, the electronic device may include a first housing, a second housing, and a flexible display whose display area changes depending on a linear movement of the first housing relative to the second housing, and the method may include identifying information related to an object and a running application, detecting a movement of the first housing, identifying a movement distance of the first housing, identifying a position at which a user grips the electronic device, and determining a position corresponding to the gripped position as a position of an object in response to the first housing moving a predetermined distance or more and the display area of the flexible display changing. The object may perform a function designated by a user's predetermined operation, and may include at least one of a visible or invisible user interface (UI) on a screen, an icon, a figure, and a specific area of the electronic device.

In the electronic device according to various embodiments, the method may include obtaining a user input that instructs the first housing to slide into or out of the second housing, and controlling the motor module based on the user input. The first housing may slide into or out from the second housing by operation of the motor module.

In the electronic device according to various embodiments, the user input may include at least one of a button input, a touch input, a gesture input, an external input from an external electronic device (e.g., an S-pen) such as hover, air gesture, or air pointer, an input via wireless communication (e.g., a BT button), and a predetermined context.

In the electronic device according to various embodiments, the motor module may include a drive motor configured to cause linear motion of the first housing in response to its rotation, and the method may include identifying the movement distance of the first housing based on the rotation angle coefficient of the driving motor included in the motor module.

According to various embodiments, the electronic device may include a grip sensor and/or a touch sensor, and the method may include obtaining a capacitance value measured by a contact, and identifying a position where the user grips the electronic device based on the capacitance value.

In the electronic device according to various embodiments, the method may include determining the position of the object to be a position that does not overlap a position of the application, in response to a partial overlap between the gripped position and the position of the application.

In the electronic device according to various embodiments, the method may include determining a position corresponding to the gripped position as the position of the object in response to a partial overlap between the gripped position and the position of the application, and changing the position of the application to a position that does not overlap the position of the object.

In the electronic device according to various embodiments, the method may include displaying the object on the flexible display based on a determined characteristic of the object.

In the electronic device according to various embodiments, the method may include determining that, during the movement of the first housing, the object is in at least one selected from a form of changing a color of the object, a form of changing a transparency of the object, and a form of changing an effect of the object, and the effect may include a highlight effect or a blinking effect for the object.

In the electronic device according to various embodiments, the method may include configuring a screen frame to be output to a display area through a rendering process in response to a change in the display area of the flexible display as the first housing moves, and configuring a screen frame to be output to a display area based on the determined object.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments of the disclosure may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a first housing;
a second housing;
a flexible display having a display area that changes depending on linear movement of the first housing with respect to the second housing;
a motor module at least operatively connected to the first housing and configured to drive the first housing to slide relative to the second housing;
a sensor module; and
a processor,
wherein the processor is configured to:
identify information related to an object and a running application;
identify a movement of the first housing;
identify a movement distance of the first housing;
identify, from the sensor module, a position at which a user grips the electronic device; and
determine a position corresponding to the gripped position as a position of an object in response to the first housing moving a predetermined distance or more and the display area of the flexible display changing, and
wherein the object performs a function designated by a user's predetermined operation, and includes at least one of a visible or invisible user interface (UI) on a screen, an icon, a figure, and a specific area of the electronic device.

2. The electronic device of claim 1, wherein the processor is configured to:
obtain a user input that instructs the first housing to slide into or out of the second housing; and
control the motor module based on the user input, and
wherein the first housing slides into or out from the second housing by operation of the motor module.

3. The electronic device of claim 1, wherein the motor module includes a drive motor configured to cause linear motion of the first housing in response to its rotation, and
wherein the processor is configured to identify the movement distance of the first housing based on a rotation angle coefficient of the drive motor included in the motor module.

4. The electronic device of claim 1, wherein the processor is configured to determine the position of the object to be a position that does not overlap a position of the application, in response to a partial overlap between the gripped position and the position of the application.

5. The electronic device of claim 1, wherein the processor is configured to display the object on the flexible display at the determined position of the object.

6. The electronic device of claim 1, wherein the processor is configured to:
determine that, during a movement of the first housing, the object is in at least one selected from a form of changing a color of the object, a form of changing a transparency of the object, and a form of changing an effect of the object, and
wherein the effect includes a highlight effect or a blinking effect for the object.

7. The electronic device of claim 1, wherein the processor is configured to:
configure a screen frame to be output to the display area through a rendering process in response to a change in display area of the flexible display as the first housing moves; and
configure the screen frame to be output to the display area based on the object.

8. A method for operating an electronic device, wherein the electronic device comprises a first housing, a second housing, and a flexible display whose display area changes depending on a linear movement of the first housing relative to the second housing,
wherein the method comprises:
identifying information related to an object and a running application;
detecting a movement of the first housing;
identifying a movement distance of the first housing;
identifying a position at which a user grips the electronic device; and
determining a position corresponding to the gripped position as a position of an object in response to the first housing moving a predetermined distance or more and the display area of the flexible display changing, and
wherein the object performs a function designated by a user's predetermined operation, and includes at least one of a visible or invisible user interface (UI) on a screen, an icon, a figure, and a specific area of the electronic device.

9. The method of claim 8, comprising:
obtaining a user input that instructs the first housing to slide into or out of the second housing; and
controlling the motor module based on the user input,
wherein the first housing slides into or out from the second housing by operation of the motor module.

10. The method of claim 8, wherein the motor module includes a drive motor configured to cause linear motion of the first housing in response to its rotation, and
wherein the method comprises identifying the movement distance of the first housing based on a rotation angle coefficient of the drive motor included in the motor module.

11. The method of claim 8, comprising:
determining the position of the object to be a position that does not overlap a position of the application, in response to a partial overlap between the gripped position and the position of the application.

12. The method of claim 8, comprising:
determining a position corresponding to the gripped position as the position of the object in response to a partial overlap between the gripped position and the position of the application; and
changing the position of the application to a position that does not overlap the position of the object.

13. The method of claim 8, comprising:
displaying the object on the flexible display based on a determined characteristic of the object.

14. The method of claim 8, comprising:
determining that, during a movement of the first housing, the object is in at least one selected from a form of changing a color of the object, a form of changing a transparency of the object, and a form of changing an effect of the object,
wherein the effect includes a highlight effect or a blinking effect for the object.

15. The method of claim 8, comprising:
configuring a screen frame to be output to a display area through a rendering process in response to a change in the display area of the flexible display as the first housing moves; and
configuring the screen frame to be output to the display area based on the determined obj ect.
